# EUROPÄISCHE PATENTSCHRIFT

(11) **EP 2 468 616 B1**
(45) Veröffentlichungstag und Bekanntmachung des Hinweises auf die Patenterteilung: **08.07.2015**
(21) Anmeldenummer: 11010038.5
(22) Anmeldetag: 21.12.2011
(51) Int. Cl.: B62K 25/04

(54) **Fahrwerksteuerung für ein Fahrrad**
Suspension control for a bicycle
Commande de suspension pour un vélo

(30) Priorität: 23.12.2010 DE 102010055828
(43) Veröffentlichungstag der Anmeldung: 27.06.2012
(73) Patentinhaber: DT Swiss AG, 2500 Biel (CH)
(72) Erfinder: Battlogg, Stefan, 6771 St. Anton i.M. (AT); Pösel, Jürgen, 6700 Bludenz (AT); Elsensohn, Gernot, 6771 St. Anton i.M. (AT); Walthert, Martin, 3270 Aarberg (CH)
(74) Vertreter: BSB Intellectual Property Law

(56) Entgegenhaltungen:
- EP-A1- 2 248 691
- EP-A2- 2 103 512
- US-A1- 2001 030 408
- US-A1- 2006 064 223

## Beschreibung

Die vorliegende Erfindung betrifft ein Verfahren zur Fahrwerksteuerung und eine Fahrwerksteuerung für ein wenigstens teilweise muskelbetriebenes Zweirad und insbesondere ein Fahrrad, mit wenigstens einer steuerbaren Dämpfereinrichtung.

Im Stand der Technik sind Fahrwerksteuerungen für Zweiräder bekannt geworden, bei denen der Benutzer beispielsweise per Hand die Dämpfereigenschaften des eingesetzten Dämpfers ändert, wenn sich beispielsweise die Bodenbeschaffenheit ändert. Fährt der Benutzer zunächst über eine Straße mit glatter Fahrbahn, so kann er den Dämpfer praktisch deaktivieren. Fährt er anschließend über einen unbefestigten Weg, so werden andere Dämpfungseinstellungen geeigneter sein. Die jeweils günstigsten Dämpfungseinstellungen hängen nicht nur von dem Gelände, sondern auch von den Bedürfnissen des Benutzers ab. Ein Benutzer präferiert stärkere Dämpfungen bei Stößen, während ein anderer Benutzer mehr Wert auf eine geringere Beeinflussung durch den Dämpfer legt.

Die jeweils günstigsten Dämpfungseigenschaften hängen folglich nicht nur vom jeweiligen Gelände, sondern auch vom Benutzer ab.

Aus der US 2006/064223 A1 ist ein Steuerungssystem zur Steuerung eines Fahrrads bekannt, bei dem verschiedene Sensoren zur Kontrolle der Parameterveränderungen in Bezug zu dem Fahrzeug vorgesehen sind. Eine Steuerungseinrichtung bestimmt Ausgangssignale zur Steuerung eines dynamisch einstellbaren Systems. Das Steuerungsssystem erlaubt einen manuellen Eingriff und auch die Aufzeichnung von Streckendaten, die im nachhinein für verschiedene Fahrer verglichen werden können.

Nachteilig an den bekannten Dämpfern ist, dass je nach auftretendem Gelände und je nach Benutzer dieser die Dämpfungseigenschaften häufig umstellen muss, um das von ihm gewünschte Ergebnis zu erzielen.

Es ist deshalb die Aufgabe der vorliegenden Erfindung eine Fahrwerksteuerung zur Verfügung zu stellen, welche mit einer geringeren Anzahl von Veränderungen der Dämpfungseigenschaften auskommt.

Diese Aufgabe wird gelöst durch eine Fahrwerksteuerung mit den Merkmalen des Anspruchs 1 und durch ein Verfahren mit den Merkmalen des Anspruchs 13. Bevorzugte Weiterbildungen der erfindungsgemäßen Fahrwerksteuerung sind Gegenstand der Unteransprüche. Weiter Vorteile und Merkmale der vorliegenden Erfindung ergeben sich aus dem Ausführungsbeispiel.

Die erfindungsgemäße Fahrwerksteuerung ist für ein wenigstens teilweise muskelbetriebenes Zweirad oder Mehrrad und insbesondere für ein Fahrrad vorgesehen und weist wenigstens eine steuerbare Dämpfungseinrichtung auf. Dabei sind eine Steuereinrichtung und Speichereinrichtung sowie eine Bedieneinrichtung zur Steuerung der Dämpfereinrichtung vorgesehen. Wenigstens eine Dämpfungseigenschaft der wenigstens einen Dämpfereinrichtung ist durch ein Signal der Steuereinrichtung beeinflussbar. Die Steuereinrichtung ist dazu ausgebildet und eingerichtet, wenigstens einen Lernmodus bereitzustellen, in welchem streckenbezogene Daten in der Speichereinrichtung abgelegt werden. Weiterhin ist die Steuereinrichtung dazu ausgebildet und eingerichtet, wenigstens einen Wiederholmodus bereitzustellen, in welchem wenigstens eine der wenigstens einen Dämpfereinrichtung entsprechend der in der Speichereinrichtung abgelegten streckenbezogenen Daten steuerbar ist.

Dabei ist wenigstens ein Sensor vorgesehen, der während des Betriebs streckenbezogene Daten über den Betriebszustand und/oder über Bedieneingaben erfasst. Vorzugsweise werden erfasste streckenbezogene Daten in der Speichereinrichtung ablegt.

Die erfindungsgemäße Fahrwerksteuerung hat viele Vorteile, da sie den Betrieb mit weniger Benutzereingaben ermöglicht, ohne dass der mögliche Eingriff in die Fahrwerksteuerung eingeschränkt oder behindert wird. Die Wiederholung vorbestimmter Strecken ist möglich, um z. B. die Einstellparameter anderer Fahrer mit den eigenen vergleichen zu können oder aber um die eigenen Einstellungen zu optimieren. Die Fahrwerksteuerung steuert oder regelt insbesondere die Dämpfungseigenschaften einer Federgabel und eines Hinterraddämpfers. Die streckenbezogenen Daten sind in der Speichereinrichtung abgelegt oder der Steuereinrichtung sonst wie zugänglich.

Die Fahrwerksteuerung verfügt vorzugsweise über mindestens einen Sensor, der streckenbezogene Betriebsdaten und/oder streckenbezogene Bedieneingaben als streckenbezogene Daten erfasst und in der Speichereinrichtung ablegt. Dadurch wird es möglich, die abgespeicherten streckenbezogenen Daten später wieder aufzurufen und beispielsweise auszuwerten.

Vorzugsweise ist die Steuereinrichtung dazu ausgebildet und eingerichtet, Bediendaten als Daten in der Speichereinrichtung abzulegen. Vorzugsweise ist die Steuereinrichtung dazu ausgebildet, in der Speichereinrichtung abgelegte streckenbezogene Daten abzurufen und wenigstens eine der wenigstens einen die Dämpfereinrichtung durch wenigstens ein Signal der Steuereinrichtung abhängig von den streckenbezogenen Daten zu steuern.

Wenn der Benutzer eine bestimmte Strecke mit dem damit ausgerüsteten Fahrrad zurücklegt, kann er anschließend auswerten, ob die von ihm vorgenommenen Änderungen zu dem gewünschten Ergebnis geführt haben.

Außerdem wird es ermöglicht, bei einem späteren erneuten Abfahren der gleichen Strecke die in der Speichereinrichtung abgelegten Daten wieder aufzurufen und automatisch anzuwenden, sodass bei einer zweiten folgenden Fahrt gegebenenfalls kein Eingriff des Benutzers mehr erforderlich ist. So wird eine Optimierung der Dämpfungseigenschaften über bestimmte Strecken oder Runden ermöglicht. Bei einer zweiten oder dritten Runde wird die Anzahl der nötigen Eingriffe erheblich reduziert, bis schließlich ein Optimum vorliegt, bei dem gegebenenfalls kein Eingriff mehr erforderlich ist. Trotzdem bleibt dem Benutzer jederzeit die Möglichkeit, die eingestellten Dämpfungseigenschaften beliebig zu verändern.

Dadurch erhält der Benutzer besonders flexible Möglichkeiten, da er sich einerseits voll auf die abzufahrende Strecke konzentrieren kann und nicht durch ständige Änderungen an den Dämpfungseigenschaften der Dämpfereinrichtung von der Strecke abgelenkt wird. Andererseits kann es jederzeit in die Dämpfungseigenschaften eingreifen und sie nach seinen aktuellen Wünschen modifizieren. Gegebenenfalls kann das bequem über eine an dem Lenker angeordnete Bedieneinrichtung oder über eine handgehaltene Bedieneinrichtung erfolgen.

Unter dem Begriff Runde wird im Sinne dieser Anmeldung nicht nur eine Runde einer Rundtour, sondern auch eine beliebige Strecke verstanden, die wiederholbar gefahren werden kann. So umfasst der Begriff auch eine Trainingstour, Tagestour, oder Urlaubsstrecke oder die Strecke eines Radrennens, welches sich über mehrere Tage erstreckt. Unter dem Begriff Runde wird hier auch eine Etappe oder Teilstrecke verstanden.

Die Umsetzung der Erfindung kann nicht nur erfolgen, wenn die Strecke schon bekannt ist, sondern auch durch direktes Umsetzen der von den Sensoren aufgenommenen Daten oder von Daten Dritter, welche ihre Daten zur Verfügung stellen.

Die Steuereinrichtung kann die Dämpfungseinrichtung nicht nur steuern, sondern auch regeln. Dazu kann ein Sensorsignal verwendet werden, um eine Rückkopplung zu erhalten und das Steuersignal entsprechend anzupassen. Die Regelung kann aktiv oder passiv erfolgen.

Vorzugsweise weist die Dämpfereinrichtung wenigstens zwei miteinander gekoppelte Dämpferkammern auf. Insbesondere ist wenigstens ein Sensor zur Erfassung der Relativbewegungen des Dämpferkolbens zueinander vorgesehen. Auch die Position des Dämpfers kann erfasst werden.

Die erfassten Sensordaten werden vorzugsweise in der Speichereinrichtung abgelegt, um für eine spätere Auswertung oder einen späteren Abruf wieder zur Verfügung zu stehen. Auch eine direkte Auswertung ist möglich.

Besonders bevorzugt weist die Fahrwerksteuerung wenigstens einen GPS-Sensor zur Erfassung der momentanen Position auf. Bei Verwendung eines GPS-Sensors wird vorzugsweise die jeweils ermittelte Position in der Speichereinrichtung abgelegt. Dabei kann das Ablegen der Position in vorbestimmten Zeitabständen erfolgen oder aber in Abhängigkeit von der aktuellen Geschwindigkeit beispielsweise an bestimmten Wegpunkten erfolgen.

Werden Kartendaten der jeweiligen Region in der Speichereinrichtung abgelegt, kann über einen GPS-Sensor und die damit ermittelte Position auf die Kartendaten zurückgegriffen werden und gegebenenfalls auch bei unbekannten Strecken auf die nachfolgenden Streckenabschnitte im vorhinein reagiert werden, da beispielsweise auf der Karte verzeichnete Steigungen schon im voraus berücksichtigt werden können. An einer solchen Steigung kann beispielsweise die Federgabel automatisch abgesenkt werden, um den Benutzer die Auffahrt zu erleichtern.

Es kann auch aus der aktuell gefahrenen Geschwindigkeit auf den aktuellen Zustand geschlossen werden. Wird die Geschwindigkeit reduziert, kann das ein Indiz für eine Bergauffahrt sein. Ist gleichzeitig die Trittfrequenz hoch, ist die Wahrscheinlichkeit hoch, dass es tatsächlich bergauf geht. Unter diesen Bedingungen wird vorzugsweise in den Bergaufmodus umgeschaltet, insbesondere wenn zusätzlich beispielsweise die Pulsfrequenz des Fahrers hoch ist.

Ist die Geschwindigkeit hoch und ist die Vertikalbeschleunigung niedrig, können harte Dämpfereigenschaften eingestellt werden, da es sich mit hoher Wahrscheinlichkeit um eine Fahrbahn mit guter Oberflächenbeschaffenheit handelt.

Kleine Stöße mit hoher Frequenz bei einer hohen Fahrgeschwindigkeit sind ein deutliches Anzeichen für Kopfsteinpflaster.

Wenn die Fahrbahn geneigt ist und starke Stöße auftreten, kann auf eine Downhill-Fahrt geschlossen werden und es können entsprechende Parameter automatisch eingestellt werden.

Besonders bevorzugt ist es, dass ein Lernmodus aktivierbar ist, in welchem die Sensordaten und die Bediendaten in der Speichereinrichtung abgelegt werden. Weiterhin ist es bevorzugt, dass wenigstens ein Wiederholmodus vorgesehen ist, in dem die Dämpfereinrichtung entsprechend der zuvor abgespeicherten Daten gesteuert wird. Dabei kann die Steuerung in vorbestimmten Zeitintervallen die abgespeicherten Daten abrufen oder aber beispielsweise ortsgesteuert in bestimmten Wegabständen auf die gespeicherten Daten zurückgreifen, um die Dämpfereinrichtung jeweils optimal zu steuern. Gesteuert kann z. B. Auch durch die Entfernung seit einem Startpunkt werden. Möglich ist es auch, die Steuerung zeitabhängig durchzuführen.

Besonders bevorzugt ist auch in dem Wiederholmodus ein beliebiges Verändern der jeweils aktuellen Einstellungen möglich. Dabei ist es möglich, dass die veränderten Einstellungen wieder gespeichert werden. Es ist aber auch möglich, beispielsweise einen Spezialmodus anzubieten, in dem die Änderungen nicht gespeichert werden, um die bislang abgelegten Daten nicht zu beeinflussen, wenn beispielsweise eine Strecke unter Sonderbedingungen gefahren wird.

Insbesondere werden in dem Wiederholmodus anhand der Positionsdaten die zugehörigen Steuerdaten aus der Speichereinrichtung ermittelt und die Dämpfereinrichtung wird dementsprechend gesteuert. Dabei können die Positionsdaten die Daten auf der Erdoberfläche und auch Höhendaten umfassen. Der Wiederholungsmodus eignet sich besonders für Rennen und Wettkämpfe und erlaubt die frühzeitige Anpassung und Vorbereitung der Wettkampfsituation.

In bevorzugten Weiterbildungen ist wenigstens ein Expertenmodus vorgesehen, in dem auch grundlegende Parameter veränderbar sind. Die Einstellung eines Expertenmodus kann beispielsweise mit einem Passwort geschützt sein.

Es kann ein Stufenprinzip vorliegen. Ein unerfahrener Benutzer kann beispielsweise nur aus einer eng begrenzten Anzahl von Möglichkeiten auswählen, wie z. B. drei oder fünf Möglichkeiten. Ein erfahrener Benutzer hat Zugang zu mehr Parametern und Einstellmöglichkeiten und kann nach Eingabe eines Kennwortes oder Änderung einer Grundeinstellung zwischen zehn oder zwanzig oder mehr Einstellungen wählen. Ein Experte kann über noch mehr Einstellmöglichkeiten verfügen. Händler oder Wartungsexperten können Grundkonfigurationen, Kalibrierungen oder sonstige Einstellungen vornehmen, die nur über einen geschützten Bereich zugänglich sind.

In bevorzugten Ausgestaltungen ist eine Federwegbegrenzung einstellbar. Insbesondere ist die Federwegbegrenzung flexibel einstellbar, um einen Hinterraddämpfer oder eine Vorderradgabel flexibel an die jeweils aktuellen Wünsche und Anforderungen anpassen zu können.

In allen Ausgestaltungen sind gespeicherte Daten vorzugsweise übertragbar vorgesehen. Beispielsweise können gespeicherte Datensätze exportiert werden und insbesondere im Internet oder im Intranet passwortgeschützt oder allgemein zugänglich - verschlüsselt oder unverschlüsselt - abgelegt werden. Über geeignete Mechanismen können solche Daten von gleichen oder anderen erfindungsgemäßen Fahrwerksteuerungen wieder importiert werden. Dadurch wird es möglich, auf die Einstellungen anderer Benutzer zuzugreifen und Voreinstellungen zu laden, wenn beispielsweise eine bestimmte Strecke ein erstes Mal gefahren wird. Dadurch, dass auf die gespeicherten Einstellungen anderer Benutzer oder beispielsweise des Herstellers zurückgreifbar ist, kann sichergestellt werden, dass für eine bestimmte Strecke jedenfalls geeignete Bedingungen und Eigenschaften der Dämpfereinrichtung voreingestellt werden. Wenn die voreingestellten Bedingungen den Wünschen des Benutzers nicht entsprechen, kann jederzeit eingegriffen werden und es können die Dämpfungseigenschaften gezielt verändert werden.

Insbesondere sind wenigstens zwei Dämpfereinrichtungen vorgesehen und miteinander gekoppelt betreibbar. Beispielsweise kann die Fahrwerksteuerung eine Federgabel und einen Hinterraddämpfer umfassen und gekoppelt miteinander steuern, sodass beide Dämpfer jeweils in ihren optimalen Arbeitspunkten angesteuert werden. Die Übertragung der Daten kann drahtlos oder drahtgebunden erfolgen.

In allen Ausgestaltungen ist es bevorzugt, dass Betriebsdaten abgelegt werden, wie beispielsweise die Anzahl der Ein- und Ausfederungen des Dämpfers oder die zurückgelegten Kilometer oder die Benutzungszeit. Anhand der gesammelten Daten können Wartungshinweise ausgegeben werden, die dem Benutzer an beispielsweise einen fälligen Ölwechsel oder dergleichen erinnern. Dadurch wird ein höheres Maß an Sicherheit und an Reproduzierbarkeit und Vergleichbarkeit von Fahrwerksteuerungen erzielt.

In allen Ausgestaltungen umfasst die Dämpfereinrichtung vorzugsweise wenigstens ein steuerbares Dämpfungsventil. Das Dämpfungsventil kann beispielsweise einen Dämpfungskanal aufweisen, der mit einem rheologischen und durch ein Feld beeinflussbaren Fluid gefüllt ist. Vorzugsweise werden magnetorheologische oder elektrorheologische Fluide oder Medien eingesetzt, die durch elektrische oder magnetische Felder beeinflusst werden. Magnetorheologische Fluide verketten sich in Richtung der Magnetfeldlinien und erhöhen quer zu den Magnetfeldlinien in Abhängigkeit von der angelegten Feldstärke ihre Viskosität erheblich.

Durch eine solche Dämpfereinrichtung wird eine flexible und schnelle Steuerung ermöglicht.

In allen Ausgestaltungen kann es möglich sein, die Federhärte oder eine Federwegverstellung vorzunehmen.

Neben GPS-Sensoren können auch weitere Sensoren am Fahrrad vorgesehen sein, die beispielsweise die Geschwindigkeit des Zweirads erfassen.

Möglich und bevorzugt ist es auch, unterschiedliche Modi einzustellen, wie beispielsweise die Modi "bergauf", "bergab", "Gelände", "Straße" etc. Beim Rundenfahren ist es bevorzugt, wenn ein Modus "Lernrunde" einstellbar ist, in der die Einstellungen optimiert werden, um anschließend beim Rundenfahren auf die zuvor gespeicherten Einstellungen zurückzugreifen.

In allen Ausgestaltungen ist es auch möglich, wenigstens einen Sensor zur Erfassung der Fahrbahneigenschaften vor dem Zweirad zu vorzusehen. Ein solcher Sensor kann beispielsweise als Stereokamera ausgebildet sein und über eine Bilderkennung den Bereich direkt vor dem Vorderrad des Zweirads erfassen, um die Dämpfungsparameter entsprechend anpassen zu können.

Neben dem Einsatz von GPS-Sensoren sind auch sonstige Sensoren möglich, die beispielsweise die Geschwindigkeit des Fahrrads messen und auswerten und die die Geschwindigkeit oder die Kraft auf den Dämpfer erfassen. Auch eine Erfassung der Steigung bzw. Neigung ist möglich.

Alle abgelegten Daten können insbesondere wieder abgerufen, verändert und zurück gespeichert werden.

Es ist möglich und bevorzugt, verschiedene Modi einzustellen wie beispielsweise den Modus "Bergauf" oder die Modi "Bergab", "Gelände", "Straße" oder "Rundenfahren".

An der Dämpfereinrichtung können Sensoren vorgesehen sein, die einen Durchschlag erfassen oder die die Federwegauslastung bestimmen.

In allen Fällen ist es bevorzugt, dass ein Feintuning jederzeit durch manuellen Eingriff des Benutzers erfolgen kann. Die Kommunikation der einzelnen Komponenten untereinander kann drahtlos sein. Möglich ist es beispielsweise, dass eine Bedieneinrichtung am Zweiradlenker angeordnet ist, die mit dem Hinterraddämpfer und/oder der Vorderradgabel drahtlos kommuniziert.

Möglich ist es auch, die Daten ins Internet zu schicken und dort in einem geschützten oder gegebenenfalls in einem öffentlich zugänglichen Bereich abzulegen.

Möglich und bevorzugt ist es auch, unterschiedliche Kanäle für die Druckstufe und die Zugstufe separat einzustellen.

Das erfindungsgemäße Verfahren dient zur Steuerung wenigstens eines Fahrwerks eines wenigstens teilweise muskelbetriebenen Zweirads mit wenigstens einer steuerbaren Dämpfereinrichtung. Es sind eine Steuereinrichtung und eine Speichereinrichtung und eine Bedieneinrichtung zur Steuerung der Dämpfereinrichtung vorgesehen. Wenigstens eine Dämpfungseigenschaft der wenigstens einen Dämpfereinrichtung ist durch wenigstens ein Signal der Steuereinrichtung beeinflussbar. Dabei legt die Steuereinrichtung in wenigstens einem Lernmodus streckenbezogene Daten in der Speichereinrichtung ab. Die Steuereinrichtung steuert in wenigstens einem Wiederholmodus die Dämpfereinrichtung entsprechend der in der Speichereinrichtung abgelegten streckenbezogenen Daten.

Vorzugsweise ist es möglich, anhand der gespeicherten streckenbezogenen Daten Wartungshinweise auszugeben.

Weitere Vorteile und Merkmale der vorliegenden Erfindung ergeben sich aus dem Ausführungsbeispiel, welches mit Bezug auf die beiliegenden Figuren erläutert wird.

In den Figuren zeigen:
- Fig. 1: eine schematische Darstellung eines Fahrrads mit einer erfindungsgemäßen Fahrwerksteuerung;
- Fig. 2: eine schematische Darstellung der Fahrwerksteuerung;
- Fig. 3: eine erfindungsgemäße Fahrwerksteuerung mit einer schematisch dargestellten geschnittenen Seitenansicht einer Dämpfereinrichtung in der Grundstellung;
- Fig. 4: eine weitere geschnittene Seitenansicht der Dämpfereinrichtung nach Fig. 3;
- Fig. 5: das Detail A aus Fig. 3 in vergrößerter Darstellung;
- Fig. 6: das Ventil der Dämpfereinrichtung nach Fig. 3 in vergrößerter perspektivischer Darstellung;
- Fig. 7: einen Querschnitt der Dämpfereinrichtung nach Fig. 3;
- Fig. 8: ein schematisches Zeitdiagramm der magnetischen Feldstärke;
- Fig. 9: eine schematische Darstellung der Daten im Betrieb bei einem Rundenfahren;
- Fig. 10: eine schematische Darstellung eines Dämpfungsventils;
- Fig. 11: eine perspektivische Ansicht einer weiteren Dämpfereinrichtung;
- Fig. 12: einen Schnitt durch den Dämpferkolben der Dämpfereinrichtung nach Fig. 11 in einer ersten Position;
- Fig. 13: einen Schnitt durch den Dämpferkolben der Dämpfereinrichtung nach Fig. 11 in einer zweiten Position; und
- Fig. 14: die Kennlinie des Ventils nach Fig. 10.

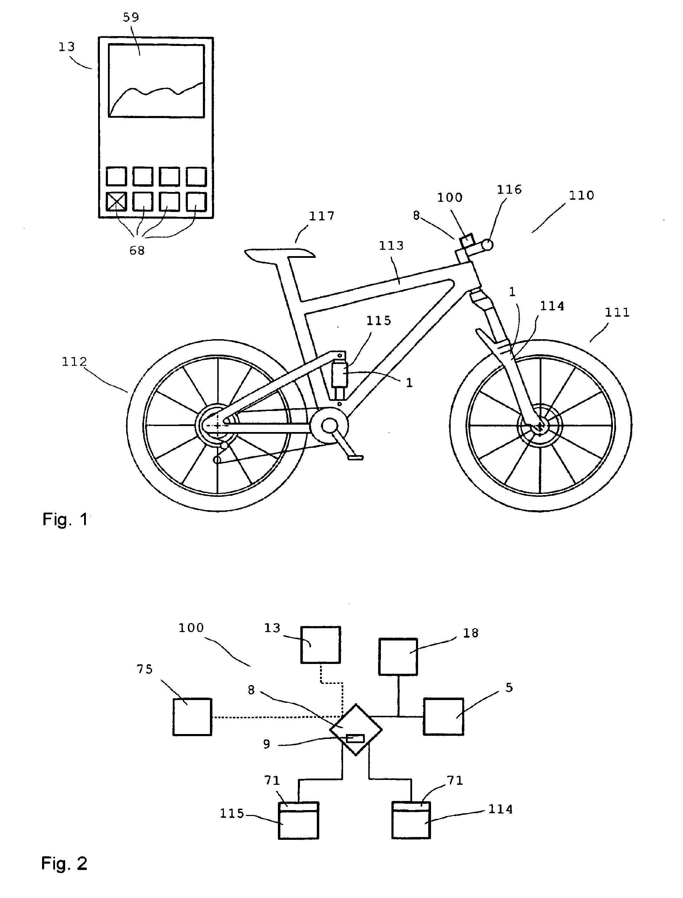

Mit Bezug auf die beiliegenden Figuren 1 bis 10 wird ein erstes Ausführungsbeispiel der Erfindung anhand einer Fahrwerksteuerung 100 mit einer Dämpfereinrichtung 1 für ein Fahrrad beschrieben.

Fig. 1 zeigt eine schematische Darstellung eines Zweirades und hier eines Fahrrades 110, welches hier als Mountainbike ausgeführt ist und mit einer Fahrwerksteuerung 100 ausgerüstet ist. Das Fahrrad 110 weist einen Rahmen 113, ein Vorderrad 111 und ein Hinterrad 112 auf. Sowohl das Vorderrad 111 als auch das Hinterrad sind mit Speichen ausgerüstet und können über Scheibenbremsen verfügen. Eine Gangschaltung dient zur Wahl des Übersetzungsverhältnisses. Weiterhin weist das Fahrrad 110 einen Sattel 117 und einen Lenker 116 auf.

Das Vorderrad 111 verfügt über eine als Federgabel 114 ausgeführte Dämpfereinrichtung 1 und an dem Hinterrad ist eine als Hinterraddämpfer 115 ausgeführte Dämpfereinrichtung 1 vorgesehen. Die Fahrwerksteuerung 100 ist hier an dem Lenker 116 vorgesehen. Die Fahrwerksteuerung 100 kann auch in eine der Dämpfereinrichtungen 1 integriert sein oder an einem anderen Ort vorgesehen sein.

Mit der Fahrwerksteuerung 100 werden in Abhängigkeit von dem aktuell eingestellten Fahrprofil und von den sonstigen Daten, die der Fahrwerksteuerung zur Verfügung gestellt werden oder auf die die Fahrwerksteuerung 100 Zugriff hat, die Dämpfungseigenschaften der Federgabel 114 und des Hinterraddämpfers 115 eingestellt. Dabei steuert die Fahrwerksteuerung 100 sowohl die Federgabel 114 als auch den Hinterraddämpfer 115 und gegebenenfalls auch die Feder- und/oder Dämpfungseigenschaften der Sattelstütze.

Zur Bedienung steht eine Bedieneinrichtung 13 zur Verfügung, die an dem Lenker 116 angeordnet sein kann, aber z. B. auch abnehmbar ausgeführt sein kann. Je nach Ausgestaltung kann die Steuereinrichtung 8 in die Bedieneinrichtung 13 integriert oder davon separat angeordnet sein. Auf der Bedieneinrichtung 13 kann ein Display 59 vorgesehen sein, um Informationen über den aktuellen Betriebszustand, Messdaten oder sonstige Informationen zur Verfügung zu stellen.

Beispielsweise kann die Bedieneinrichtung auch als Fahrradcomputer dienen und Informationen über die aktuelle Geschwindigkeit, Durchschnittsgeschwindigkeit, Tages-, Tour-, Runden- und Gesamtkilometer, sowie über die aktuelle Position, momentane Höhe und die gefahrene Strecke oder die noch vorausliegende Strecke ausgeben. Auch die Ausgabe weiterer Auswertungen ist möglich.

Die Bedieneinrichtung 13, die in der Darstellung nach Fig. 1 der Übersichtlichkeit halber stark vergrößert und von dem Lenker entfernt abgebildet ist, weist Bedienknöpfe 68 oder dergleichen auf.

Fig. 2 zeigt eine schematische Darstellung der Fahrwerksteuerung 100, wobei die Kommunikationsverbindungen der beteiligten Komponenten mit der Steuereinrichtung 8 eingezeichnet sind. Die Bedieneinrichtung 13 wird über eine hier punktiert eingezeichnete drahtgebundene oder drahtlose Verbindung mit der Steuereinrichtung 8 verbunden. Die Verbindung muss nicht kontinuierlich bestehen, wenn die Steuereinrichtung 8 nicht Teil der Bedieneinrichtung 13 ist.

Beispielhaft sind zwei Sensoren 5 und 18 eingezeichnet, deren Messdaten als Daten 6 an die Steuereinrichtung 8 übermittelt werden. Die Sensoren können Informationen über die aktuelle Fahrbahnsituation, die aktuelle Steigung oder die aktuellen Belastungen der Dämpfereinrichtungen 1 liefern, die zur automatischen Steuerung der Fahrwerksteuerung 100 verwendet werden.

Bei erneutem Fahren einer Runde werden im Wiederholmodus gespeicherte Werte aus einer Speichereinrichtung 9 aufgerufen und die Dämpfereinrichtungen 1 werden entsprechend eingestellt.

Die Federgabel 114 und der Hinterraddämpfer 115 sind hier jeweils mit lokalen Steuereinheiten 71 ausgerüstet, die die lokale Steuerung der jeweiligen Dämpfereinrichtung 1 übernehmen. Möglich ist es auch, dass die Steuereinrichtung 8 die Dämpfereinrichtungen 1 zentral steuert. Eine Verbindung in das Internet 75 kann zeitweise, bei Bedarf oder periodisch bestehen, um dort in einem geschützten oder auch frei zugänglichen Bereich Daten 6 abzulegen, abzurufen oder anderen Personen zur Verfügung zu stellen.

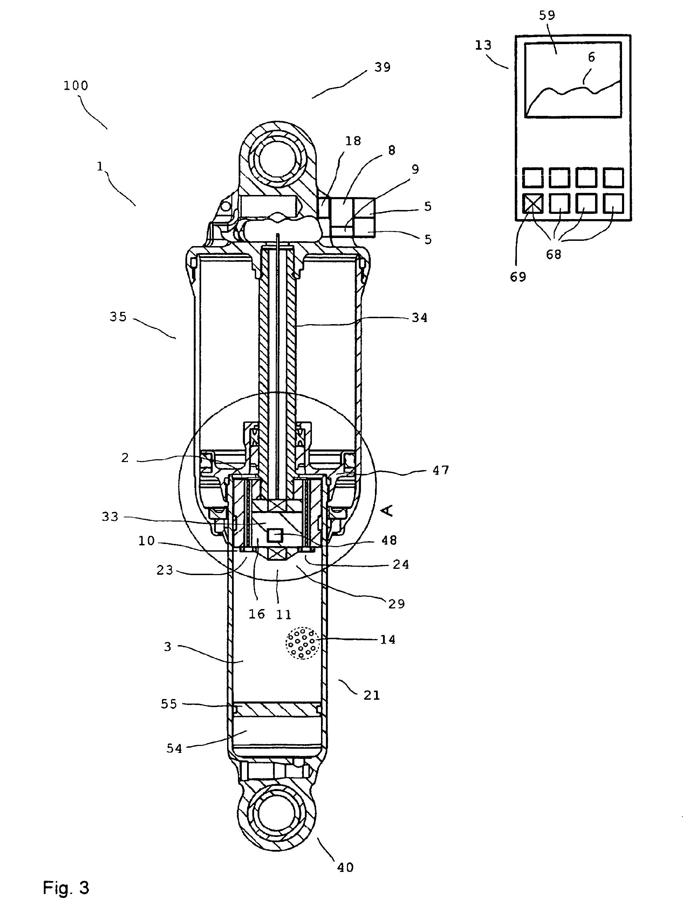

Die in Fig. 3 dargestellte Dämpfereinrichtung 1 ist als Hinterraddämpfer 115 ausgeführt und weist ein erstes Ende 39 und ein zweites Ende 40 auf, welche mittelbar oder unmittelbar mit dem Rahmen 113 bzw. dem Hinterrad 112 entsprechend verbunden werden.

Die in Fig. 1 abgebildete Federgabel 114 ist mit einer entsprechenden Dämpfereinrichtung 1 ausgerüstet. Möglich ist es auch, eine Fahrwerksteuerung 100 nur mit einer steuerbaren Federgabel 114 oder nur mit einem steuerbaren Hinterraddämpfer auszurüsten.

Eine Fahrwerksteuerung 100, welche sowohl die Federgabel 114 und auch den Hinterraddämpfer 115 steuert oder regelt erlaubt eine besonders weitgehende und optimale Steuerung der Fahreigenschaften eines damit ausgerüsteten Zwei- oder Mehrrades. Neben dem Einsatz an rein muskelbetriebenen Fahrrädern ist auch der Einsatz an Zwei- oder Mehrrädern und insbesondere an Fahrrädern mit Elektrounterstützung möglich und bevorzugt.

Die in Fig. 3 im Schnitt dargestellte Dämpfereinrichtung 1 umfasst einen Dämpfer, der hier eine erste Dämpferkammer 2 und eine zweite Dämpferkammer 3 umfasst, die von einem Dämpferkolben 29 voneinander getrennt sind. In dem Dämpferkolben 29 sind Dämpfungskanäle 23 und 24 als Strömungsverbindungen vorgesehen, die hier zur Dämpfung in der Druckstufe und in der Zugstufe dienen.

Sowohl die erste Dämpferkammer 2 als auch die zweite Dämpferkammer 3 und die Dämpfungskanäle 23 und 24 sind hier mit einem rheologischen Medium 14 gefüllt, welches hier als magnetorheologisches Fluid ausgeführt ist und ferromagnetische Partikel, wie beispielsweise Carbonyleisenpulver in einer Trägerflüssigkeit enthält. Die Trägerflüssigkeit basiert vorzugsweise auf Öl mit Zusatzstoffen wie Stabilisatoren, Frostschutzmitteln, Abriebs- und Viskositätsverbesserern. Das rheologische Medium 14 ist in Fig. 1 stark schematisch in einem Ausschnitt dargestellt.

Der Dämpferkolben 29 dient hier als Ventil bzw. Dämpfungsventil 4, mit welchem die Strömung des magnetorheologischen Fluids 14 von der ersten Dämpferkammer 2 zu der zweiten Dämpferkammer 3 über die Dämpfungskanäle 23 und 24 gesteuert wird. Durch ein Magnetfeld der Felderzeugungseinrichtung 11 wird die Viskosität des magnetorheologischen Fluids in den Dämpfungskanälen 23 und 24 beeinflusst und mit steigender Feldstärke wird die Bewegung des Kolbens 29 stärker gedämpft. Zusätzlich zu der Beeinflussung über ein Magnetfeld ist noch ein Beeinflussungsmittel 10 vorgesehen. Diese ist als Steuerscheibe oder dergleichen ausgebildet und kann die Dämpfungskanäle 23 und 24 auf Wunsch vollständig verschließen, um z. B. ein Lock-Out zu realisieren. Um eine Überbelastung bei aktiviertem Lock-Out zu vermeiden, können zusätzlich Shims oder dergleichen vorgesehen sein, um bei besonders starken Stößen die Dämpfungskanäle wieder zu öffnen. Das Beeinflussungsmittel 10 kann drehbar vorgesehen sein und automatisch oder manuell von der Schließposition in die geöffnete Stellung und wieder zurück überführbar sein.

Eine Kolbenstange 34 schließt sich an den Dämpferkolben 29 an und führt durch eine hier als Gasfeder ausgeführte Federeinrichtung 35. Die Federeinrichtung 35 umfasst eine erste Federkammer 41 und eine zweite Federkammer 42, die von einem Kolben 47 getrennt sind.

Die Fahrwerksteuerung 100 umfasst jedenfalls eine elektrische oder elektronische Steuereinrichtung 8, die insbesondere auch über einen Mikroprozessor oder Mikrocomputer verfügen kann.

Die Steuereinrichtung 8 kann eine Speichereinrichtung 9 umfassen, in der Daten, Steuerprogramme, Programmabläufe, Steuerdaten, Messdaten, Daten über das Fahrrad und über die eingesetzten Dämpfereinrichtungen 1, sowie persönliche Daten des Benutzers abgelegt sind.

Die Steuereinrichtung 8 kann über eine Kommunikationseinrichtung, wie ein Modem oder über eine drahtgebundene oder drahtlose Schnittstelle oder eine eigenständige Internetverbindung über spezielle oder standardisierte Schnittstellen und Funkverbindungen verfügen.

Wie in Fig. 2 dargestellt, kann die Steuerung lokal oder zentral erfolgen.

Der Steuereinrichtung 8 ist wenigstens ein Sensor 5 zur Erfassung von Daten zugeordnet. Solche Daten 6 können beispielsweise Positionsdaten 61 eines GPS-Sensors 18 umfassen, die mit dem zugehörigen Zeitstempel in der Speichereinrichtung 9 abgelegt werden. Auch Daten eines Sensors 48 zur Erfassung der Feldstärke des Magnetfeldes der Felderzeugungseinrichtung 11 können erfasst, verarbeitet und gespeichert werden.

Als Daten 6 werden weiterhin Messdaten über den aktuellen Zustand 7 oder den Betriebszustand erfasst. Beispielsweise können Daten über den aktuellen Einfederungs- oder Ausfederzustand erfasst werden. Die Daten über den Zustand 7 können aber insbesondere auch Daten über die Position des Fahrrades enthalten oder repräsentieren oder aber Daten über den Zustand der Fahrbahn enthalten.

Bevorzugt sind auch die Erfassung und Speicherung von Bediendaten 60, von Geländedaten 62, von Daten über die Stärke von Stößen, über den Aus- und Einfederungszustand der Dämpfereinrichtung 1 als Daten 6. Vorzugsweise sind auch Daten über die Geschwindigkeit des Fahrrads, gegebenenfalls das Gewicht des Fahrrads und des Fahrers in der Speichereinrichtung 9 abgelegt.

Eine Bedieneinrichtung 13 ist zur Bedienung vorgesehen. Die Bedieneinrichtung 13 ist datenmäßig wenigstens zeitweise mit der Dämpfereinrichtung 1 verbunden.

Die Bedieneinrichtung 13 kann Schaltflächen bzw. Bedienköpfe 68 zur Bedienung und wenigstens ein Display 59 zur Ausgabe visueller Informationen aufweisen. Eine Bedienung ist auch über das Touchpanel möglich, da das Display 59 als berührungsempfindliche Fläche ausgeführt ist, die beispielsweise neben Druckberührungen an Einzelpunkten auch Gesten und dergleichen erkennen kann. Möglich ist auch eine optische oder kapazitive Erkennung von Benutzerhandlungen. Auf dem Display 59 kann der zeitliche Verlauf von erfassten Daten 6 oder von Signalen 50 ausgegeben werden, um dem Benutzer eine direkte Auswertung zu ermöglichen.

Die Bedieneinrichtung 13 kann Schnittstellen zur Übergabe von Daten und Programmen aufweisen. Die Schnittstellen können kabelgebunden oder drahtlos arbeiten, sodass drahtgebundene und/oder drahtlose Datenverbindungen möglich sind. Neben speziellen Verbindungsarten sind auch Verbindungen über serielle, parallele oder Netzwerkschnittstellen möglich. Die Bedieneinrichtung 13 und auch die Steuereinrichtung 8 können gegebenenfalls über Infrarot, Bluetooth, Wireless Lan, GPRS, UMTS, ANT+ Ethernet, Glasfaser und dergleichen mehr Verbindungen herstellen und darüber Daten austauschen. Möglicherweise kann als Bedieneinrichtung 13 auch ein handgehaltener oder sonstiger Computer oder ein Mobiltelefon oder dergleichen verwendet werden. Auf einem solchen Gerät kann auch ein Programm zur generellen

Steuerung ablaufen.

Möglich ist es auch, dass die Steuerungseinrichtung 8 in der Bedieneinrichtung 13 angeordnet oder dieser zugeordnet ist. Während die Bedieneinrichtung 13 nicht ständigen Kontakt zu der Dämpfereinrichtung 1 oder der Steuereinrichtung 8 haben muss, sollte die Steuereinrichtung jedenfalls im Betrieb ständigen Kontakt zu der Dämpfereinrichtung 1 haben.

An dem ersten Ende 39 kann ein manuelles Einstellorgan vorgesehen sein, um z. B. generelle Änderungen an der Federcharakteristik vorzunehmen oder um Grundeinstellungen vorzugeben. Das Einstellorgan kann z. B. Drehteile als Einstellelemente umfassen. Vorzugsweise werden die aktuellen Einstellungen und auch die Grundeinstellungen über die Steuereinrichtung 8 gesteuert.

Die Speichereinrichtung 9 verfügt vorzugsweise über einen nichtflüchtigen Speicher, um Steuer- und Benutzerdaten dauerhaft auch ohne Stromzufuhr zu speichern.

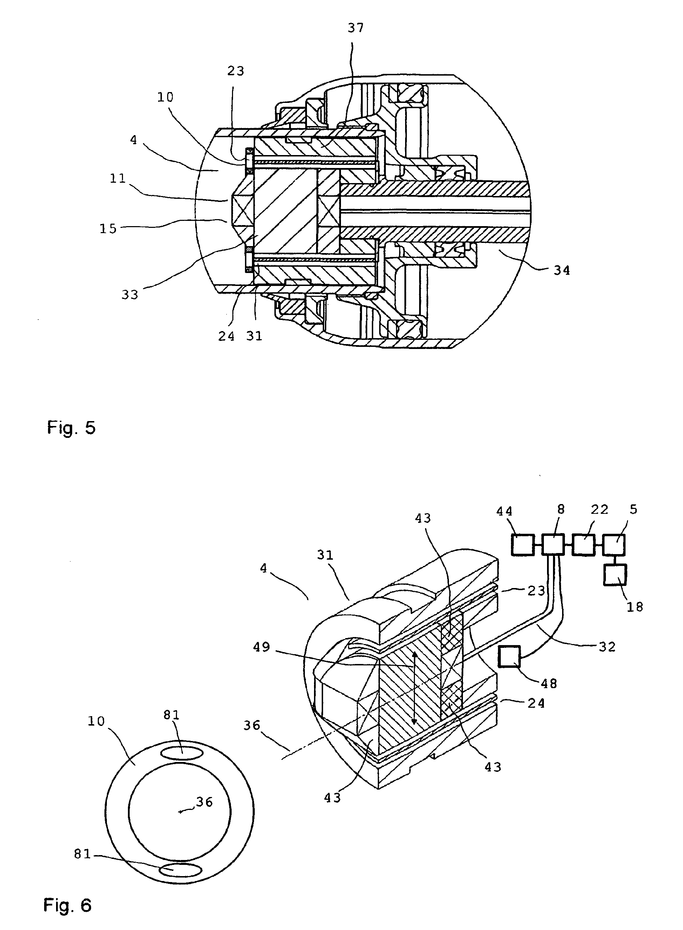

An dem Ende der zentralen Kolbenstange 34 ist der Dämpferkolben 29 vorgesehen, der eine Felderzeugungseinrichtung 11 enthält. Die Felderzeugungseinrichtung 11 kann wenigstens eine elektrische Spule 15 und wenigstens einen Dauermagneten 16 umfassen. Der Dauermagnet 16 kann wenigstens einen Kern 33 umfassen (vgl. Fig. 5).

Zur Abdichtung des Dämpferkolbens 18 in dem Dämpfergehäuse 17 kann ein Kolbenring als Dichtung vorgesehen sein. Es ist aber auch möglich, dass das Magnetfeld der Felderzeugungseinrichtung 11 für eine vollständige Abdichtung zum Dämpfergehäuse 17 sorgt, da das Magnetfeld der Felderzeugungseinrichtung 11 oder ein weiteres Magnetfeld eine Verkettung der Partikel in dem magnetorheologischen Fluid bewirkt, sodass eine ausreichende Abdichtung bewirkbar ist.

Der Kern 33 des Dauermagneten 16 ist von einer Spule 15 als Felderzeugungseinrichtung 11 umgeben. Der Kern 33 besteht zumindest teilweise aus einem hartmagnetischen Material mit einer Koerzitivfeldstärke, die größer als 1000 A/m und insbesondere größer als 10000 A/m ist. Hier besteht der Kern 33 vollständig aus Alnico, welches eine hohe Koerzitivfeldstärke aufweist und sehr temperaturstabil ist. Es ist von Vorteil, wenn nur ein oder mehrere Teile des Kerns hartmagnetisch sind, um den Aufwand für das Magnetisieren klein zu halten.

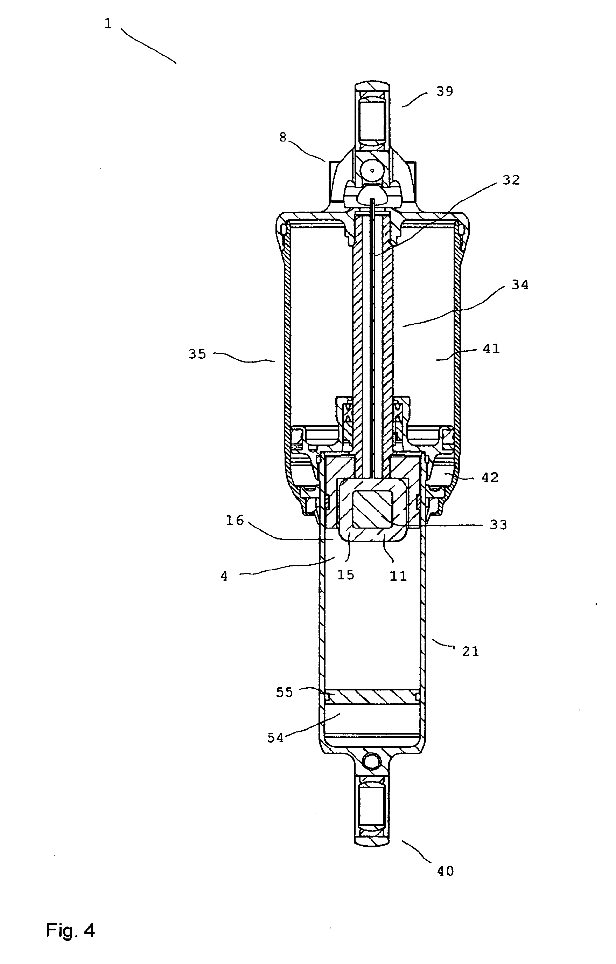

In Fig. 4 ist ein Längsschnitt durch die Dämpfereinrichtung 1 dargestellt, wobei der Längsschnitt hier rechtwinklig zu der Darstellung gemäß Fig. 1 gewählt wurde.

An dem als Ventil bzw. Dämpfungsventil 4 ausgeführten Dämpferkolben 29 ist in der Darstellung gemäß Fig. 2 gut erkennbar, wie die elektrische Spule 15 den hartmagnetischen Kern 33 des Dauermagneten 16 umgibt. Dadurch wird sichergestellt, dass bei Erzeugung eines magnetischen Impulses 17 durch die elektrische Spule 15 eine maximale Wirkung auf den hartmagnetischen Kern 33 erzeugt wird, sodass eine zuverlässige Einstellung und Veränderung der Feldstärke 19 des Dauermagneten 16 erreicht wird.

In der Darstellung gemäß Fig. 2 sind die elektrischen Leitungen 32 zur Steuerung und Energieübertragung klar erkennbar. Mit den Leitungen 32 wird die benötigte Energie für die elektrische Spule 15 zugeführt und die Steuerung vorgenommen. Gegebenenfalls ist es auch möglich, dass die Regeleinrichtung oder Steuereinrichtung 8 innerhalb der Dämpfereinrichtung 1 vorgesehen ist, sodass die Leitungen 21 nur zur Energiezufuhr dienen.

Die Ausgleichsfeder 54 ist typischerweise mit Gas gefüllt und wird über einen Trennkolben 55 von der Dämpferkammer 3 getrennt. Die Ausgleichsfeder 54 dient zum Ausgleich des Volumens, wenn die Kolbenstange 34 in das Dämpfergehäuse 21 eintaucht, da dann das gesamte dem magnetorheologischen Fluid 14 zur Verfügung stehende Volumen durch den eingeschobenen Anteil der Kolbenstange 34 verringert wird.

In Fig. 5 ist eine vergrößerte Darstellung des Details A aus Fig. 3 abgebildet.

Deutlich erkennbar sind die Dämpfungskanäle 23 und 24, mit denen die Strömungsverbindung zwischen der ersten Dämpferkammer 2 und der zweiten Dämpferkammer 3 zur Verfügung gestellt wird.

Das hier als Dämpferkolben 29 ausgeführte Ventil 4 weist zentral in der Mitte den Kern 33 aus hartmagnetischem Material auf, der ringsum von einer elektrischen Spule 15 umgeben ist.

An den Stirnseiten des Kerns 33 sind die Dämpfungskanäle 23 und 24 vorgesehen. Radial wird der Kern 33 schließlich von einem Ringleiter 37 umgeben, der aus einem magnetisch leitenden Material besteht. Vorzugsweise besteht der Ringleiter 37 aus einem weichmagnetischen Material. Gegebenenfalls kann er wenigstens teilweise auch aus einem hartmagnetischen Material bestehen.

Durch den Ringleiter 37 wird das magnetische Feld des Dauermagneten 16 mit dem hartmagnetischen Kern 33 geschlossen. Dabei verlaufen die Feldlinien des magnetischen Feldes quer zu den Dämpfungskanälen 23 und 24, sodass eine maximale Wirkung auf das magnetorheologische Fluid 14 erzielbar ist.

Die Zeichnung zeigt eine Ausführungsvariante, bei der die Dämpfungskanäle 23 und 24 und der Ringleiter 37 über die ganze Kolbenlänge gehen, der Kern 33 aber nur ungefähr halb so lang ist. Der Kraftbereich des Dämpfers kann über die Länge der Dämpfungskanäle 23 und 24 und über die Stärke des Magnetfeldes eingestellt werden. Ein Lock-Out kann über das Beeinflussungsmittel 10 eingestellt werden, in dem das als Steuerscheibe oder dergleichen ausgeführte Beeinflussungsmittel 10 mit den Öffnungen 81 von den Dämpfungskanälen 23 und 24 weggedreht wird. Der Vorteil eines zusätzlich in Reihe geschalteten Beeinflussungsmittels 10 liegt darin, dass die maximale Feldstärke 51 der Felderzeugungseinrichtung 11 erheblich geringer sein kann.

In der dargestellten Ausführung konzentriert sich das Feld des Kerns 33 auf einen Teil der Dämpfungskanäle 23 und 24. Über andere Kernformen lassen sich andere Kraftbereiche und Dämpferkennlinien einstellen.

Außerdem wird ein Ventil bzw. Dämpfungsventil 4 dargestellt, das beim ausfahrenden Dämpfer einen Teil der Dämpfungskanäle 23 und 24 bedarfsweise verschließt und so eine Unterscheidung von Zug- und Druckstufe des Dämpfers ermöglicht. Über eine Zwischenwand 25 können die Dämpfungskanäle 23 bzw. 24 jeweils in Teilkanäle 26 und 27 aufgeteilt werden, wodurch die Wirksamkeit noch erhöht wird (vgl. auch Fig. 5 und die dortige Beschreibung). Als Ventil kann beispielsweise ein Shim nach dem Stand der Technik verwendet werden, das eine geringe Federkraft aufweist.

Über separate Shims oder auch über Einwegventile kann eine separate Dämpfung in der Zug- und in der Druckstufe erfolgen. Beispielsweise kann ein Kanal 23 nur für die Dämpfung in der Zugstufe und es kann ein Kanal 24 nur für die Dämpfung in der Druckstufe vorgesehen sein (oder umgekehrt). Einwegventile an den Dämpfungskanälen 23 und 24 verhindern dabei vorzugsweise den Durchfluss der entsprechenden Kanäle in der jeweils anderen Dämpfungsstufe. Möglich ist es auch, zwei unterschiedliche Dämpfungsventile 4 vorzusehen, von denen ein Dämpfungsventil 4 wenigstens einen Kanal für die Dämpfung in der Zugstufe und ein Dämpfungsventil 4 wenigstens einen Dämpfungskanal für die Dämpfung in der Druckstufe aufweist. Darüber ist eine einfache und separate Steuerung der Dämpfungseigenschaften in der Zug-und Druckstufe möglich.

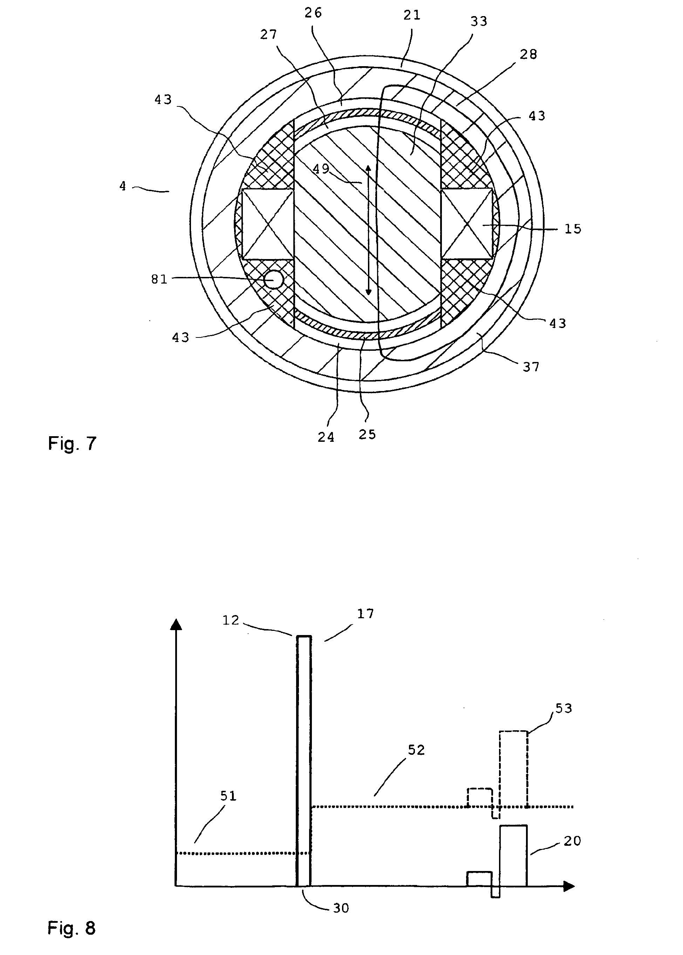

Es ist weiterhin möglich, dass wenigstens ein separater Strömungskanal 81 vorgesehen wird. Ein solcher zusätzlicher Strömungskanal 81 kann vorzugsweise parallel zu den Dämpfungskanälen 23 und 24 geschaltet sein und ist in Fig. 7 eingezeichnet. Dort ist der zusätzliche Strömungskanal 81 in einem Bereich des Isolators 43 vorgesehen, sodass der Querschnitt des Strömungskanals 81 gar nicht oder nur gering durch ein Feld der Felderzeugungseinrichtung 11 beeinflusst wird. Wenn der Strömungskanal 81 für eine Blow-Off-Funktion vorgesehen ist, wird ein Ende des Strömungskanals 81 mit einem Rückschlagventil, Shim oder dergleichen versehen, welches bei Bedarf automatisch öffnet. Ohne Ventilfunktion dient der Strömungskanal 81 als Bypass, um ein gutes Ansprechverhalten zu erzielen.

In Fig. 6 ist eine leicht perspektivische und geschnittene Darstellung des Dämpfungsventils 4 dargestellt, wobei in dem Kern 33 die Verbindungsachse 49 von Nordpol und Südpol des Kerns 33 angedeutet ist. Zur Abdichtung und zur Lenkung des magnetischen Feldes des Kerns 33 sind in den seitlichen Bereichen magnetische Isolatoren 43 vorgesehen, sodass das durch den Kern 33 erzeugte magnetische Feld nicht seitlich abgelenkt wird, sondern im Wesentlichen senkrecht durch die Dämpfungskanäle 23 und 24 durchtritt. Die Dämpfungskanäle 23 und 24 laufen hier etwa parallel zu der Längsachse 36 des Dämpferkolbens 29. In anderen Ausgestaltungen können die Dämpfungskanäle 23 und 24 auch auf der Außenseite 31 des Dämpferkolbens 29 vorgesehen sein.

Schematisch eingezeichnet ist in Fig. 4 eine Sensoreinrichtung, die einen oder mehrere Sensoren 5, 18 und 48 etc. umfassen kann. Bevorzugt ist ein Sensor 48 zur Detektion der Stärke des magnetischen Feldes vorgesehen, um ein Maß für die Stärke des von dem Kern 33 erzeugten magnetischen Feldes in den Dämpfungskanälen 23 und 24 zu bestimmen. Als weitere Sensoren sind Temperatursensoren, Viskositätssensoren, Drucksensoren Weg- und Beschleunigungs- und Neigungssensoren und dergleichen möglich. Die Sensoreinrichtung ist mit der Steuereinrichtung 8 zur Steuerung der magnetischen Impulse, die über die Leitungen 32 ausgegeben werden, verbunden.

Die für einen magnetischen Impuls 17 benötigte elektrische Energie wird über eine Energiespeichereinrichtung 22 zur Verfügung gestellt. Über eine Energiespeichereinrichtung 22 wie z. B. einen Kondensator oder eine Batterie ist es möglich, auch bei einer Stromversorgung, die nur über eine geringe Spannung und eine geringe Leistung verfügt, die benötigte Energie für einen magnetischen Impuls 17 zur Verfügung zu stellen, um eine Magnetisierung oder Entmagnetisierung des Kerns 33 zu erzielen. Die Stromversorgung ist auch durch einen Akku eines E-Bikes, einen Generator, Rekuperierung, einen Dynamo oder insbesondere auch einen Nabendynamo möglich.

Eine Schwingkreiseinrichtung 44 kann vorgesehen sein, um eine definierte Entmagnetisierung des Kerns 33 zu gewährleisten. Dabei wird ein schwächer werdendes magnetisches Wechselfeld an den Kern 33 angelegt, womit eine Entmagnetisierung erreicht wird.

Fig. 5 zeigt einen Querschnitt durch die Dämpfereinrichtung 1 mit dem Dämpfungsventil 4, wobei zur Übersichtlichkeit eine Feldlinie 28 des von dem Kern 33 erzeugten Magnetfeldes eingezeichnet ist.

Klar erkennbar ist, dass in dem Bereich der Dämpfungskanäle 23 und 24 die Feldlinien 28 nahezu senkrecht (normal zu den Polflächen) durch den Spalt hindurchtreten. Dadurch wird eine Verkettung der magnetorheologischen Partikel entlang der Feldlinien 28 bewirkt, wodurch in Strömungsrichtung der Dämpfungskanäle 23 und 24 eine maximale Dämpfung erzielt wird.

Der zentrale Kern 33 besteht hier aus Alnico als einem hartmagnetischen Material und weist eine Polarisierung von Nordpol in Richtung des Südpols entlang der Verbindungsachse 49 auf. In Richtung der Enden der Verbindungsachse 49 sind die Dämpfungskanäle 23 und 24 ausgerichtet, die hier spaltartig ausgebildet sind und durch Zwischenwände bzw. Fächerelemente 25 in Richtung der Spaltbreite nochmals unterteilt sind, sodass Teilkanäle 26 und 27 an den Dämpfungskanälen 23 und 24 entstehen.

Die Zwischenwand 25 besteht vorzugsweise aus einem guten magnetischen Leiter, sodass die Zwischenwand nur einen geringen magnetischen Widerstand darstellt. Gegebenenfalls können die Zwischenwände 25 auch aus hartmagnetischem Material bestehen, welche durch die magnetischen Impulse 17 der Spule 15 dauerhaft - aber wieder veränderbar - magnetisiert werden.

Auf den beiden Seiten des Kerns 33 ist in der Darstellung gemäß Fig. 7 die Spule 15 erkennbar, die den Kern 33 vollständig umgibt. Zusätzlich sind an den Seiten noch magnetische Isolatoren 43 vorgesehen, die in diesen Bereichen die Stärke des dort vorhandenen Magnetfeldes stark reduzieren, da die Magnetfeldlinien dem geringsten Widerstand folgen und sich durch den Kern 33 und den Ringleiter 37 erstrecken.

In bevorzugten Ausgestaltungen können die Querschnittsflächen der Dämpfungskanäle 23 und 24 beispielsweise zusätzlich noch durch eine mechanische Verstellung einstellbar sein.

Das Dämpfungsventil 4 wird hier durch den Ringleiter 37, den darin aufgenommenen Kern 33, die Spule 15 und die magnetischen Isolatoren 43, sowie die Dämpfungskanäle 23 und 24 und den zusätzlichen Strömungskanal 81 gebildet.

Im hier dargestellten Ausführungsbeispiel ist das Dämpfungsventil 4 als Dämpferkolben 29 in dem Dämpfergehäuse 21 längsverschieblich angeordnet.

Vorteilhaft ist es, nur den Anteil des Dauermagneten 16 aus Alnico zu fertigen, der notwendig ist, um eine bestimmte Feldstärke und Flussdichte aufrecht erhalten zu können. Beispielsweise kann nur ein Teil des Kerns 33 aus Alnico sein und der Rest aus einem anderen ferromagnetischen Material bestehen.

Denkbar ist auch, den gesamten Dauermagneten 16 aus einem Material mit hartmagnetischen Eigenschaften zu fertigen. Werden beispielsweise in Fig. 7 der Kern 33 und der Ringleiter 37 großteils aus hartmagnetischem Material gefertigt, kann dessen Koerzitivfeldstärke kleiner sein, als wenn nur ein Teil des Kerns 33 aus hartmagnetischem Material besteht.

Fig. 8 zeigt die Funktionsweise bei der Veränderung oder Einstellung einer gewünschten Magnetfeldstärke 19, von einer ersten Magnetfeldstärke 51 auf eine zweite Magnetfeldstärke 52. Dargestellt ist über der Zeit die Stärke des Magnetfeldes 19 und dabei ist die Feldstärke des Kerns 51 gepunktet dargestellt, während das von der elektrischen Spule 15 erzeugte magnetische Feld 12 durchgezogen eingezeichnet ist.

Klar erkennbar ist, dass die von der elektrischen Spule 15 erzeugte Magnetfeldstärke 12 über den größten Teil der Zeit Null ist, da ein von der elektrischen Spule 15 erzeugtes Magnetfeld nicht für den normalen Betrieb nötig ist und somit dort keine elektrische Energie benötigt wird.

Ein von der elektrischen Spule 15 erzeugtes Magnetfeld 12 wird nur benötigt, wenn eine Veränderung der Magnetfeldstärke des Dauermagneten 16 angestrebt wird.

So liegt die von dem Dauermagneten 16 erzeugte magnetische Feldstärke 51 zunächst bei einem geringeren Wert, bis ein magnetischer Impuls 17 durch die elektrische Spule 15 ausgelöst wird, wobei die von der elektrischen Spule 15 erzeugte Magnetfeldstärke 12 eine entsprechende Stärke aufweist, um den hartmagnetischen Kern 33 dauerhaft mit einer entsprechenden Stärke zu magnetisieren.

Beispielsweise kann die magnetische Feldstärke des Dauermagneten 16 von einer zunächst geringeren Feldstärke 51 auf eine entsprechend höhere Feldstärke 52 erhöht werden, um eine stärkere Dämpfung zu bewirken bzw. um das Dämpfungsventil 4 zu schließen.

Während die Impulslänge 30 für den magnetischen Impuls 17 nur sehr kurz ist und im Bereich von einigen Millisekunden liegen kann, weist der Dauermagnet 16 anschließend dauerhaft die hohe magnetische Feldstärke 52 auf, die bei einer entsprechenden Magnetfeldstärke 12 des magnetischen Impulses 17 auch bis in die Sättigung des verwendeten hartmagnetischen Materials reichen kann. Die von der Spule 15 während des magnetischen Im― pulses 17 erzeugte Magnetfeldstärke 12 bewirkt eine dauerhafte Änderung der magnetischen Feldstärke des Magneten 16 von zunächst einer magnetische Feldstärke 51 zu einer magnetischen Feldstärke 52.

Aus Fig. 8 ist ersichtlich, dass die Energieeinsparung gegenüber einem herkömmlichen System, das dauernd Strom benötigt, von der Häufigkeit der Ummagnetisierungen abhängt. Doch auch bei häufigem Ummagnetisieren, beispielsweise im Sekundentakt, liegt der Strombedarf geringer als bei einem vergleichbaren Dämpfer nach dem Stand der Technik. Wird die Ummagnetisierung nur bei Bedarf betätigt, also beispielsweise bei einem Wechsel der Fahrbahnbeschaffenheit, tritt der Vorteil gegenüber anderen Systemen noch erheblich deutlicher zu Tage.

Bei einer entsprechend geringeren Magnetisierung des Kerns 33 wird ein entsprechend geringes magnetisches Feld 19 erzeugt. Eine Entmagnetisierung kann - wie bereits beschrieben - durch ein schwächer werdendes magnetisches Wechselfeld erzeugt werden.

Weiterhin zeigt Fig. 8 im rechten Teil des Diagramms schematisch noch eine Situation, bei der die Spule 15 auch zur zeitlichen Modifikation des wirksamen Magnetfeldes 53 verwendet wird. Wird die Spule 15 nur mit einem geringen und z.B. zeitlich variablen Magnetfeld 20 beaufschlagt, welches in Fig. 8 im rechten Teil durchgezogen eingezeichnet ist, so wird das insgesamt wirksame Magnetfeld 53 dementsprechend beeinflusst und je nach Polarisation verstärkt oder geschwächt. Damit ist auch eine dynamische Beeinflussung des wirkenden magnetischen Feldes 53 möglich, ohne die dauerhafte Magnetisierung des Dauermagneten 16 (Feldstärke 52) zu ändern.

Möglich ist es auch, zwei oder mehr elektrische Spulen in Verbindung mit entsprechenden Kernen einzusetzen.

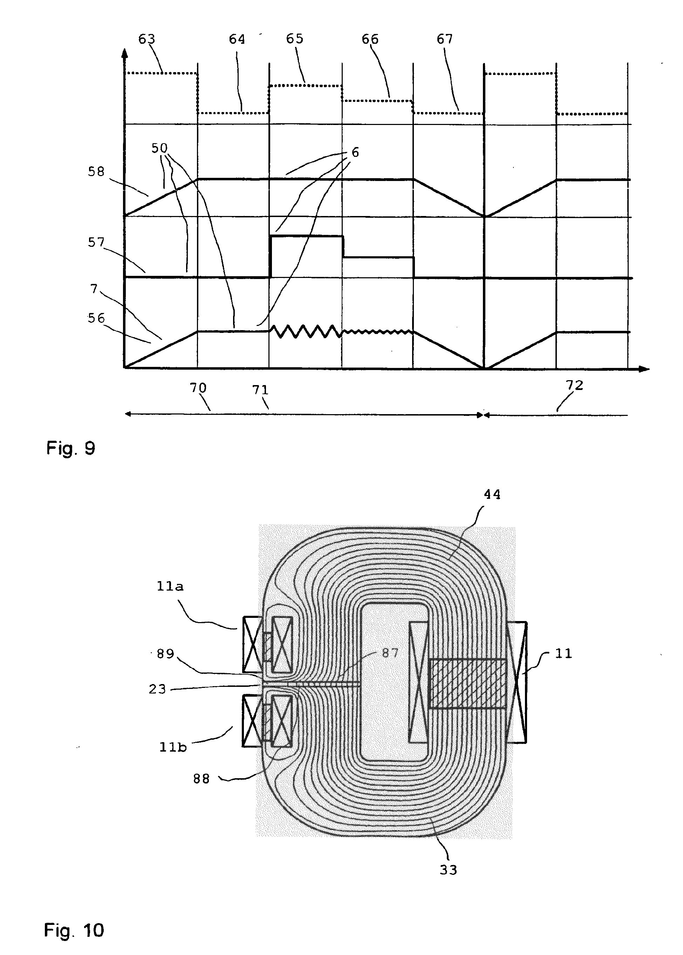

Fig. 9 zeigt ein schematisches Diagramm verschiedener Daten 6 und Signale 50 über einer Wegstrecke 70. Die Wegstrecke 70 besteht hier aus einer ersten Runde 71 und einer nur teilweise dargestellten Runde 72. In einem ersten Durchlauf kann in einem "Lernmodus" die Steuereinrichtung 8 Daten 6 und ausgegebene Signale 50 erfassen und abspeichern. Dazu gehören auch die Signale 50, mit denen die Dämpfungseinrichtung 1 bzw. das Dämpfungsventil 4 gesteuert werden. Gespeichert werden auch die Bediendaten 60.

Die gespeicherten Daten 6 können bei Durchlauf einer zweiten Runde 72 abgerufen werden und die Dämpfungseinrichtung 1 kann analog gesteuert werden wie in der ersten Runde, ohne dass der Benutzer an der Bedieneinrichtung 13 Eingaben vornehmen muss.

Im Lernmodus werden alle Daten wie Messdaten und Bedieneingaben gespeichert. Im Wiederholmodus werden die Daten und zugehörigen Signale 50 in Abhängigkeit von der jeweiligen Position abgerufen und die Signale 50 werden ohne erneute Eingaben des Benutzers zur Steuerung der Steuerungseinrichtung 13 verwendet. Eine "Override"-Funktion kann vorgesehen sein, die auch im Wiederholmodus alle Bedieneingaben zulässt und vorrangig berücksichtigt und für die nächste Runde speichert. Die Runden 71 und 72 müssen nicht direkt nacheinander gefahren werden. Möglich ist es auch, dass die Runde 71 an einem ersten Tag und die Runde 72 zu einer späteren Uhrzeit am gleichen Tag oder an einem anderen Tag gefahren wird.

Möglich und bevorzugt ist es auch, dass die abgespeicherten Daten einer Runde 71 zu einer anderen Fahrwerksteuerung 100 übertragen werden, um dort als Grundlage für die Steuerung zu dienen. Beispielsweise können der Hersteller, Vereine oder Einzelpersonen Daten inkl. der zugehörigen Signale 50 speichern und Dritten zur Verfügung stellen.

In Fig. 9 sind konkret verschiedene Verläufe über der Wegstrecke 70 dargestellt. Die unterste Kurve 56 zeigt beispielsweise ein stark schematisches Höhenprofil der Wegstrecke 70. Die Wegstrecke beginnt mit einer Steigung, gefolgt von einem flachen und ebenen Wegstück. Daran schließt sich ein Abschnitt mit stärkeren Stößen und schließlich ein Abschnitt mit kleineren Stößen an, bevor ein Gefälle folgt und der Ausgangspunkt wieder erreicht wird und die Runde 72 beginnt.

Die Kurve 57 zeigt schematisch die Intensität der Stöße über dem Streckenverlauf. Deutlich erkennbar ist der Bereich der starken Stöße auf dem Wegabschnitt mit einer hohen mittleren Stoßintensität. Auf dem Wegabschnitt mit kleineren Stößen ergibt sich ein Bereich mittlerer Stoßintensität. Im Bereich der Steigung, des ebenen Wegabschnitts und des Gefälles sind in der hier nur stark schematischen Abbildung keine relevanten Stöße eingezeichnet bzw. zu erkennen.

In Kurve 58 sind die Höhendaten des GPS-Sensors 18 abgebildet, der die jeweilige Höhe entweder direkt ermittelt oder aber die Höhendaten aus im Speicher abgelegten Kartendaten Daten über die ermittelte Ortsposition ableitet. Anhand der Kurve 58 kann die Steuereinrichtung 8 Steigungen oder Gefälle detektieren. In Verbindung mit abgelegtem oder über eine Datenverbindung zugänglichen Kartenmaterial mit Höhenprofil kann schon im voraus auf die Länge einer Steigung oder eines Gefälles geschlossen werden, wenn der zu nehmende Weg vorbekannt ist.

Nach einer Fahrt oder nach einem vorgegebenen oder wählbaren Zeitintervall oder auch auf direkten Befehl hin kann eine Analyse der Zustände des Feder- und Dämpfungssystems durchgeführt werden. Wird dabei beispielsweise festgestellt, dass der volle Federweg gar nicht oder nur sehr selten benutzt wurde, kann die Steuerungseinrichtung automatisch die Empfehlung ausgeben, die Federhärte des Systems zu verringern. Umgekehrt kann eine entsprechende Erhöhung der Federhärte oder auch der Dämpfung empfohlen werden.

Bei der Fahrt können unterschiedlichste Parameter erfasst und abgespeichert werden. Insbesondere können Daten bzw. Kurven über den Hub der Dämpfereinrichtung, über die gefahrene Geschwindigkeit, die Beschleunigungen in Fahrtrichtung und senkrecht oder quer dazu, sowie über Neigung des Bodens, die Anzahl und die jeweilige Position der Veränderungen der Dämpfungseigenschaften sowie über die Trittfrequenz, das jeweils aktuelle Übersetzungsverhältnis der Gangschaltung, die Herzfrequenz des Benutzers etc. abgelegt werden.

Wenn die Fahrwerksteuerung beispielsweise anhand der Trittfrequenz, der Anzahl und Stärke der Dämpfungen, der aktuellen Geschwindigkeit und anhand der Steigung und gegebenenfalls der Herzfrequenz des Benutzers auf eine Ermüdung des Benutzers Rückschlüsse zieht, kann eine stärkere Dämpfung eingestellt werden, um dem Benutzer ein bequemeres Fahren zu ermöglichen. Das kann beispielsweise der Fall sein, wenn nur eine geringe Geschwindigkeit mit relativ hoher Herzfrequenz gefahren wird, obwohl das Gelände eben und die Fahrbahn glatt ist. Umgekehrt kann bei hohen Fahrgeschwindigkeiten in einem ebenen Gelände auch ohne Auswertung der Dämpfungsvorgänge auf einen guten Fahrbahnbelag geschlossen werden, sodass die Dämpfung entsprechend eingestellt werden kann.

Aus dem Geschwindigkeitsprofil kann auf die aktuelle Fahrsituation rückgeschlossen werden. Wird eine Strecke einmal oder regelmäßig mit hoher Geschwindigkeit gefahren, wird sich der Benutzer dort beim Training oder in einem Rennen befinden, sodass die Fahrwerksteuerung entsprechende Bedingungen einstellt. Fährt der Benutzer die gleiche Strecke nun ein anderes Mal langsam, so kann der Benutzer beispielsweise nach Abschluss der Trainingsrunde entspannt nach Hause fahren, wozu andere Dämpfungseigenschaften sinnvoller oder einfacher bequemer sein können.

Die Kurve mit den Signalen 63 bis 67 zeigt die Signale 50, die von der Steuereinrichtung 8 ausgegeben werden. Die einzelnen Signale 63 bis 67 können dabei automatisch von der Steuereinrichtung 8 ermittelt oder von dem Benutzer eingegeben werden. Eine automatische Ermittlung kann aufgrund zuvor gespeicherter Daten 6 erfolgen.

Das Signal 63 wird hier ausgegeben, welches beispielsweise ein Lockout der Dämpfereinrichtung 1 bewirkt, um bei der Steigung des ersten Wegabschnitts ein dort unnötiges Dämpfen zu vermeiden. Gleichzeitig kann mit dem Signal 63 eine Federgabel als Dämpfungseinrichtung 1 einfedern, um dem Benutzer auf einer steilen Bergauffahrt eine angenehmere Sitzposition zu ermöglichen.

Das Signal 63 kann aufgrund einer entsprechenden Benutzereingabe oder aufgrund automatisch ermittelter Werte ausgegeben werden. Erkennt die Fahrwerksteuerung 100 beispielsweise mit dem GPS-Sensor 18 die Steigung und die Stärke und Länge der Steigung über abgespeicherte Kartendaten oder eine zuvor gefahrene Runde 71, kann das Signal 63 zum Lockout bzw. Blockieren der Dämpfereinrichtung 1 mit eventuell gleichzeitiger Absenkung der Vorderradgabel auch automatisch ausgegeben werden.

Gegebenenfalls wird vor automatischen Änderungen der Dämpfereinstellungen ein optisches und/oder akustisches und/oder sonstiges Signal durch die Steuerungseinrichtung 8 ausgegeben, damit der Benutzer nicht von Änderungen wie eine Federgabelabsenkung überrascht wird.

Bevorzugt ist es auch, dass insbesondere weitgehende Änderungen an den Dämpfungseigenschaften nur nach Bestätigung durch z. B. Drücken eines Knopfes oder nach akustischer Bestätigung durch den Fahrer vorgenommen werden. Zu weitgehenden Änderungen zählt insbesondere das Absenken einer Federgabel, da dies zu einer unterschiedlichen Fahrposition führt.

Auf dem ebenen Streckenabschnitt wird das Signal 64 ausgegebenen, welches hier eine nur geringe Dämpfung bewirkt. Möglich ist aber insbesondere auf ebenen Strecken ohne besondere Stoßbelastung auch weiterhin eine starke Dämpfung oder eine Blockierung der Dämpfereinrichtung 1.

Im folgenden Streckenabschnitt mit stärkeren Stößen wird ein Signal 65 ausgegeben, welches hier eine stärkere Dämpfung bewirkt. Im Anschluss daran wird Signal 66 mit einer geringen Dämpfung auf dem Streckenabschnitt mit kleineren Stößen ausgegeben. Auf dem Streckenabschnitt mit Gefälle wird hier vom Benutzer oder automatisch das Signal 67 für eine noch geringere Dämpfung ausgegeben.

In allen Fällen ist auch eine automatische Generierung von Signalen 63 bis 67 aufgrund der übrigen sensorisch gewonnenen Daten 6 bevorzugt. Die Stärke und Art der Dämpfung kann insbesondere auch von der gewählten Betriebsart bzw. dem gewählten Modus abhängen. Ein manueller Eingriff kann jederzeit möglich sein.

In allen Ausgestaltungen ist es bevorzugt, im Falle von Energiemangel rechtzeitig genug noch vordefinierte Eigenschaften einzustellen. Unterschreitet die noch zur Verfügung stehende Restenergie in der Speichereinrichtung ein vorbestimmtes Maß, wie z. B. 5% oder 10% kann ein Warnsignal ausgegeben und/oder automatisch auf vordefinierte oder einstellbare Notlaufeigenschaften oder Grundeigenschaften umgestellt werden. Dadurch kann sichergestellt werden, dass immer eine Rückfahrt oder Weiterfahrt mit vernünftigen Grundeinstellungen möglich ist. Bei einer anderen und insbesondere größeren Schwelle von z. B. 10%, 15%, 20% oder 25% kann auf einen Energiesparmodus umgeschaltet werden, in welchem weniger energieintensive Einstellungen vorgenommen werden. Bei Dämpfereinrichtungen mit Remanenzeigenschaften kann die Anzahl der Ummagnetisierungen pro Zeiteinheit reduziert werden. Möglich ist es auch, die Anzahl der Zwischenstufen zu begrenzen.

Der Energiespeicher 22 kann wiederaufladbar und insbesondere austauschbar vorgesehen sein. Die Größe, Kapazität und somit auch das Gewicht des Energiespeichers 22 können so an die gewünschten Bedingungen angepasst werden. Bei Renn- oder Wettkampfbedingungen wird ein genau angepasster Energiespeicher 22 verwendet. Bei Tagestouren kann er größer als bei kurzen Fahrten gewählt werden. Bei E-Bikes steht grundsätzlich schon Energie zur Verfügung, sodass auf einen separaten Energiespeicher 22 verzichtet werden kann.

Es ist möglich und bevorzugt, dass eine (Grund-)Kalibrierung durch den Hersteller erfolgt. Eine Feinkalibrierung kann durch das Team oder den Verein oder den örtlichen Fahrradhändler erfolgen. Im Rahmen einer Wartung können ein Reset und eine erneute Kalibrierung erfolgen.

In Fig. 10 ist eine Dämpfereinrichtung 1 dargestellt, bei der drei unterschiedliche Felderzeugungseinrichtungen 11, 11a und 11b vorgesehen sind. Die einzelnen Felderzeugungseinrichtungen 11, 11a und 11b können jeweils einen Dauermagneten und eine elektrische Spule umfassen. Der Aufbau der Dämpfereinrichtung 1 kann im Übrigen identisch zu dem Aufbau in Fig. 3 sein.

Durch die drei unterschiedlichen und gezielt veränderbaren Felderzeugungseinrichtungen 11, 11a und 11b können die Dämpfungseigenschaften noch variabler angepasst werden. Durch eine unterschiedliche Einstellung der jeweiligen Magnetisierung können unterschiedlichste Bedingungen für die Dämpfungskanäle 23 und 24 eingestellt werden.

Die Summe der einzelnen Felder der Felderzeugungseinrichtungen 11, 11a und 11b ergeben ein Gesamtfeld, das den Dämpfungskanal 23 bzw. 24 durchflutet. Die Form des Feldes beeinflusst dabei die Dämpferkennlinie 65. Die Felderzeugungseinrichtung 11 bestimmt hier die grundsätzliche Stärke des Feldes 51. Die Felderzeugungseinrichtungen 11a und 11b können das Feld im Dämpfungskanal 23 bzw. 24 beeinflussen.

Sind die Felderzeugungseinrichtung 11a und 11b gleich polarisiert wie die Felderzeugungseinrichtung 11, herrscht im Dämpfungskanal 23 ein homogenes Magnetfeld, dessen Stärke von der Magnetisierung aller Felderzeugungseinrichtung abhängt. Sind die Felderzeugungseinrichtung 11a und 11b umgekehrt gepolt wie die Felderzeugungseinrichtung 11, bildet sich im Dämpfungskanal 23 ein inhomogenes Magnetfeld aus.

Verschiedene Abschnitte wie ein Wirkabschnitt 87 mit maximaler Feldstärke, ein Übergangsabschnitt 88 mit stark abfallender Feldstärke und ein Bypass-Abschnitt 89 mit praktisch keiner oder nur sehr geringer Feldstärke werden ausgebildet. Die Form der Abschnitte hängt von der Magnetisierung der einzelnen Felderzeugungseinrichtungen ab und kann über einen weiten Bereich eingestellt werden. Möglich ist es auch, die beiden Felderzeugungseinrichtungen 11a und 11b gegensinnig zu polen, wobei dann einer wieder gleich gepolt ist wie die Felderzeugungseinrichtung 11. Der Einstellbereich der Dämpfereinrichtung 1 kann dadurch weiter vergrößert werden.

Die Spaltbreite des Dämpfungskanals 23 ist erheblich geringer als die Spaltlänge, wobei das Verhältnis von Spaltlänge zu Spaltbreite den Faktor 2 übersteigt und insbesondere größer 5 oder sogar größer als 10 ist.

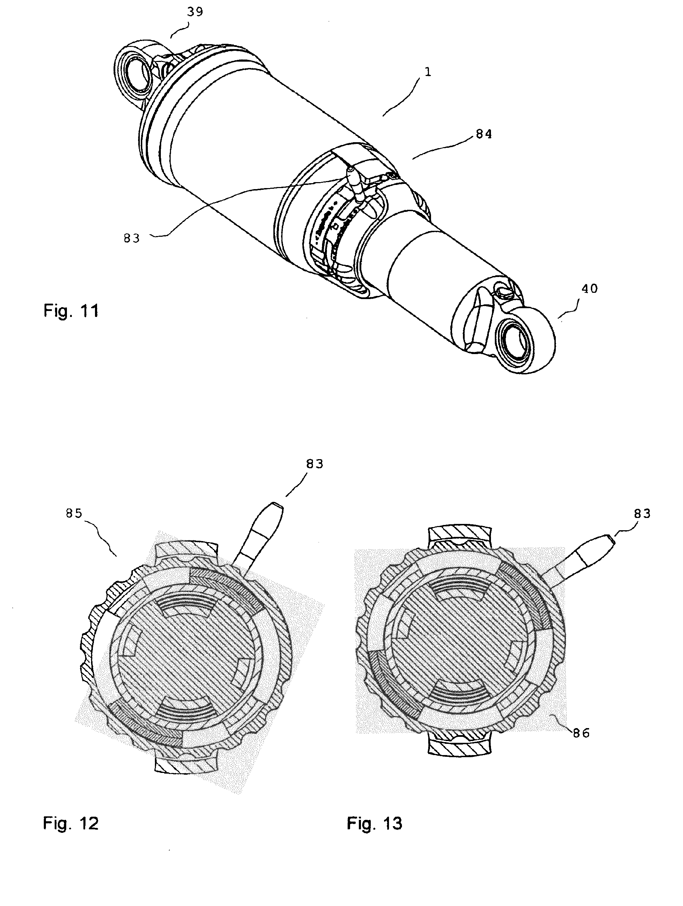

In Fig. 11 ist eine perspektivische Ansicht einer weiteren Dämpfereinrichtung 1 dargestellt, die grundsätzlich über die gleichen Funktionen wie die Dämpfereinrichtung aus Fig. 10 verfügt. Damit ist auch die Dämpfereinrichtung 1 durch eine Steuereinrichtung 8 in Abhängigkeit von Daten 6 von Sensoren 5 steuerbar. Zusätzlich ist hier ein mechanischer Bedienhebel 83 vorgesehen, der von der in Fig. 11 abgebildeten ersten Position 84 über die in Fig. 12 dargestellte Position 85 in die in Fig. 13 wiedergegebene dritte Position 86 verstellbar ist. Zwischenpositionen sind möglich.

Über die Verstellung des Bedienhebels 83 wird der Anteil der Dämpfungskanäle 23 und 24 eingestellt, die einem Magnetfeld einer bestimmten Stärke ausgesetzt sind. Der Querschnitt der Dämpfungskanäle 23 und 24 kann wieder in drei Abschnitte unterteilt werden, nämlich einen Wirkabschnitt 87, einen Übergangsabschnitt 88 und einen Bypass-Abschnitt 89. Durch die Wahl einer Position 84, 85 oder 86 kann das Verhältnis der Größe der Abschnitte 87 bis 89 zueinander gewählt werden. In der Position 86 ist der Bypass-Abschnitt am größten und in der Position 84 am kleinsten.

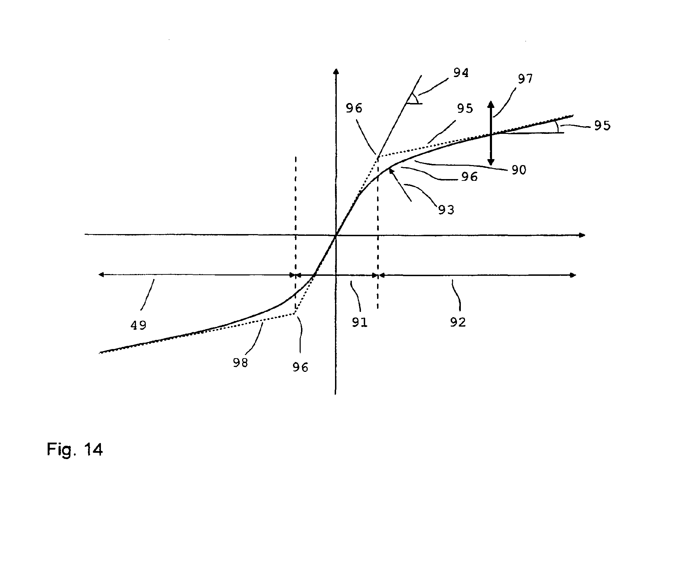

Fig. 14 zeigt eine Dämpferkennlinie 90 der Dämpfereinrichtung 1 nach Fig. 10 mit dem Dämpfungsventil 4 in einem Kraft-Geschwindigkeitsdiagramm des Dämpferkolbens. Der Low-Speed-Bereich 91 und der High-Speed-Bereich 92 sind über eine sanfte Abrundung mit einem Radius 93 verbunden. Die Kennlinie ist hier symmetrisch aufgebaut und zeigt den gleichen Verlauf für die Zug- und Druckstufe. Ein unterschiedlicher Verlauf der beiden Stufen ist aber grundsätzlich möglich und erwünscht.

Grundsätzlich entspricht auch die Kennlinie der Dämpfereinrichtung 1 nach den Figuren 11 bis 13 der Kennlinie 90. Die Variation wird dort über die Größe des Bypass-Abschnitts 89 und des Übergangsabschnitt 88 sowie des Sperrabschnitts oder Wirkabschnitts 87 erzielt.

Bei der Dämpfereinrichtung 1 nach Fig. 10 wird die Steigung 94 der Dämpferkennlinie im Low-Speed-Bereich 91 im Wesentlichen durch den Bypass-Abschnitt 89 bestimmt. Im High-Speed-Bereich 92 wird die Steigung 95 wesentlich durch den Querschnitt des gesamten Dämpfungskanals 23 bzw. 24 sowie die Stärke des Feldes im Wirkabschnitt 87 bestimmt.

Im Übergangsabschnitt 88, in welchem über seiner Ausdehnung ein schwächer werdendes Magnetfeld wirkt, führt die vorteilhafte nicht-lineare Ausprägung zu der Abrundung, die zu einer angenehmen und sicheren Betriebsweise führt.

Eingezeichnet ist weiterhin ein Pfeil 97, der die Auswirkung eines unterschiedlich starken Magnetfeldes anzeigt. Mit einem stärkeren Magnetfeld verschiebt sich die Kennlinie nach oben, während sie sich bei einem schwächeren Magnetfeld nach unten verschiebt.

Punktiert eingezeichnet ist eine Dämpferkennlinie 98, die ohne Übergangsabschnitt 88 vorliegen würde, wenn neben dem magnetorheologischen Dämpfungskanal 23 bzw. 24 noch ein zusätzlicher Dämpfungskanal 81 als Bypasskanal vorgesehen ist.

Die Steigung im Low-Speed-Bereich 94 ist durch den Anteil des Bypass-Abschnitts 89 einstellbar. Je größer der Bypass-Abschnitt 89, desto kleiner die Steigung. Auch der Nulldurchgang wird durch den Bypass-Abschnitt 89 erzeugt, da durch den Bypass-Abschnitt 89 jederzeit Dämpfungsfluid unbeeinflusst fließen kann, sodass schon bei kleinen Kräften eine entsprechende Dämpferkolbenbewegung ausgelöst wird.

Die Steigung im High-Speed-Bereich 95 wird durch die Form des gesamten Dämpfungskanals 23 und 24 und die eingestellte Stärke des magnetischen Feldes 52 im Wirkabschnitt 87 beeinflusst.

Der für den Komfort und die Sicherheit wichtige Bereich mit der Abrundung wird durch den Übergangsabschnitt 88 des Dämpfungskanals 23 bzw. 24 abgerundet, sodass eine ergonomische und sichere Betriebsweise ermöglicht wird. Die Größe des abgerundeten Bereichs ergibt sich aus der Größe und Gestalt des Übergangsabschnitts 88, der durch eine entsprechende Einstellung der Stärke der Magnetfelder der Felderzeugungseinrichtungen 11, 11a und 11b flexibel einstellbar ist. Die Stromversorgung durch einen Generator, Dynamo oder insbesondere auch einen Nabendynamo ist auch möglich.

Die Erfindung stellt eine vorteilhafte Fahrwerksteuerung zur Verfügung, die einen, zwei oder mehr Dämpfer umfassen kann. Durch die Speicherung der Daten und durch einen späteren Abruf können Daten auch ausgetauscht und Freunden, Vereinskameraden und ganz allgemein anderen Personen zur Verfügung gestellt werden. Dadurch kann jeder Benutzer seine eigene persönliche Fahrweise testen, vergleichen und überprüfen. Unerfahrene Benutzer können bei bekannten Strecken auf erprobte Werte zurückgreifen. Experten und Profis können auch experimentelle Einstellungen ausprobieren und sich an das Optimum herantasten. Die gewonnenen Erfahrungen können beispielsweise in Vereinen oder insbesondere auch in Internetforen ausgetauscht werden. Der Austausch über gewonnene Erfahrungen mit bestimmten Einstellungen bringt Erkenntnisse.

### Bezugszeichenliste:

1 Dämpfereinrichtung 2-3 Dämpferkammer 4 Dämpfungsventil 5 Sensor 6 Daten 7 Zustand 8 Steuereinrichtung 9 Speichereinrichtung 10 Beeinflussungsmittel 11 Felderzeugungseinrichtung 12 Feldstärke 13 Bedieneinrichtung 14 rheologisches Medium 15 Spule 16 Dauermagnet 17 Magnetischer Impuls 18 GPS-Sensor 19-20 Feldstärke 21 Dämpfergehäuse 22 Energiespeicher 23-24 Dämpfungskanal 25 Zwischenwand 26-27 Teilkanal 28 Magnetfeldlinie 29 Dämpferkolben 30 Impulslänge 31 Außenseite 32 Elektrische Leitungen 33 Kern 34 Kolbenstange 35 Federeinrichtung 36 Längsachse 37 Ringleiter 39-40 Ende 41-42 Federkammer 43 Isolator 44 Schwingkreiseinrichtung 47 Kolben 48 Sensor 49 Verbindungsachse
- 50: Signal
- 51-53: Feldstärke
- 54: Ausgleichsfeder
- 55: Trennkolben
- 56-58: Signal
- 59: Display
- 60: Bediendaten
- 61: Positionsdaten
- 62: Geländedaten
- 63-67: Signal
- 68: Bedienknopf
- 69: Gewählter Modus
- 70: Zeitintervall
- 71: Steuereinheit
- 72: Zeitintervall
- 75: Internet
- 81: Strömungskanal
- 82: Öffnung
- 83: Einstelleinrichtung
- 84-86: Position
- 87: Wirkabschnitt
- 88: Übergangsabschnitt
- 89: Bypass-Abschnitt
- 90: Dämpferkennlinie
- 91: Low-Speed-Bereich
- 92: High-Speed-Bereich
- 93: Radius
- 94-95: Steigung
- 96: Knickpunkt
- 97: Pfeil
- 98: Dämpferkennlinie
- 100: Fahrwerksteuerung
- 110: Fahrrad
- 111: Vorderrad
- 112: Hinterrad
- 113: Rahmen
- 114: Federgabel
- 115: Hinterraddämpfer
- 116: Lenker
- 117: Sattel

## Patentansprüche

1. Fahrwerksteuerung (100) für ein wenigstens teilweise muskelbetriebenes Zweirad mit wenigstens einer steuerbaren Dämpfereinrichtung (1), wobei eine Steuereinrichtung (8) und eine Speichereinrichtung (9) und eine Bedieneinrichtung (13) zur Steuerung der Dämpfereinrichtung (1) vorgesehen sind, und wobei wenigstens eine Dämpfungseigenschaft der Dämpfereinrichtung (1) durch ein Signal (50) der Steuereinrichtung (8) beeinflussbar ist,
**dadurch gekennzeichnet,**
**dass** die Steuereinrichtung (8) dazu ausgebildet und eingerichtet ist, wenigstens einen Lernmodus bereitzustellen, in welchem streckenbezogene Daten (6) in der Speichereinrichtung (9) abgelegt werden,
und **dass** die Steuereinrichtung (8) dazu ausgebildet und eingerichtet ist, wenigstens einen Wiederholmodus bereitzustellen, in welchem die Dämpfereinrichtung (1) entsprechend der in der Speichereinrichtung (9) abgelegten streckenbezogenen Daten (6) steuerbar ist.

2. Fahrwerksteuerung (100) nach Anspruch 1, wobei wenigstens ein Sensor (5) vorgesehen ist, der während des Betriebs streckenbezogene Daten (6) über den Betriebszustand (7) und über Bedieneingaben erfasst und in der Speichereinrichtung (9) ablegt.

3. Fahrwerksteuerung (100) nach Anspruch 1 oder 2, wobei die die Steuereinrichtung (8) dazu ausgebildet und eingerichtet ist, Bediendaten (6, 60) als Daten (6) in der Speichereinrichtung (9) abzulegen.

4. Fahrwerksteuerung (100) nach Anspruch 1, 2 oder 3, wobei die Dämpfereinrichtung (1) wenigstens zwei miteinander gekoppelte Dämpferkammern (2, 3) umfasst und wobei insbesondere wenigstens ein Sensor (5) zur Erfassung der Relativbewegung des Dämpferkolbens (2, 3) zueinander vorgesehen ist.

5. Fahrwerksteuerung (100) nach Anspruch 1, 2, 3 oder 4, wobei wenigstens ein Sensor (5) als GPS-Sensor (18) zur Erfassung von Positionsdaten (61) der momentanen Position vorgesehen ist.

6. Fahrwerksteuerung (100) nach mindestens einem der vorhergehenden Ansprüche, wobei in dem Wiederholmodus anhand von Positionsdaten (6, 61) zugehörige Steuerdaten aus der Speichereinrichtung (9) ermittelbar und die Dämpfereinrichtung (1) entsprechend steuerbar ist, wobei insbesondere in dem Wiederholmodus ein Verändern der Einstellungen möglich ist.

7. Fahrwerksteuerung (100) nach mindestens einem der vorhergehenden Ansprüche, wobei anhand von Positionsdaten (6, 61) und/oder Geländedaten (6, 62) wenigstens eine Dämpfungseigenschaft der Dämpfereinrichtung (1) einstellbar ist.

8. Fahrwerksteuerung (100) nach mindestens einem der vorhergehenden Ansprüche, wobei ein Expertenmodus vorgesehen ist.

9. Fahrwerksteuerung (100) nach mindestens einem der vorhergehenden Ansprüche, wobei eine Federwegsbegrenzung einstellbar ist.

10. Fahrwerksteuerung (100) nach mindestens einem der vorhergehenden Ansprüche, wobei gespeicherte Daten (6) übertragbar sind.

11. Fahrwerksteuerung (100) nach mindestens einem der vorhergehenden Ansprüche, wobei wenigstens zwei Dämpfereinrichtungen (1) vorgesehen und miteinander gekoppelt betreibbar sind.

12. Fahrwerksteuerung (100) nach mindestens einem der vorhergehenden Ansprüche, wobei die Dämpfereinrichtung (1) wenigstens ein steuerbares Dämpfungsventil (4) umfasst.

13. Verfahren zur Steuerung eines Fahrwerks für ein wenigstens teilweise muskelbetriebenes Zweirad mit wenigstens einer steuerbaren Dämpfereinrichtung (1), wobei eine Steuereinrichtung (8) und eine Speichereinrichtung (9) und eine Bedieneinrichtung (13) zur Steuerung der Dämpfereinrichtung (1) vorgesehen sind, und wobei wenigstens eine Dämpfungseigenschaft der Dämpfereinrichtung (1) durch ein Signal (50) der Steuereinrichtung (8) beeinflussbar ist,
**dadurch gekennzeichnet,**
**dass** die Steuereinrichtung (8) in wenigstens einem Lernmodus streckenbezogene Daten (6) in der Speichereinrichtung (9) ablegt,
und **dass** die Steuereinrichtung (8) in wenigstens einem Wiederholmodus die Dämpfereinrichtung (1) entsprechend der in der Speichereinrichtung (9) abgelegten streckenbezogenen Daten (6) steuert.

14. Fahrwerksteuerung (100) nach mindestens einem der vorhergehenden Ansprüche, wobei anhand der gespeicherten Daten (6) Wartungshinweise ausgegeben werden.

## Claims

1. Suspension system (100) for an at least partially muscle-powered two-wheeled vehicle having at least one controllable damper device (1) wherein a control device (8) and a storage device (9) and an operating device (13) for controlling the damper device (1) are provided, and wherein at least one damping characteristic of the damper device (1) can be influenced by a signal (50) of the control device (8),
**characterized in**
**that** the control device (8) is configured and organized to provide at least one teaching mode in which route-related data (6) are stored in the storage device (9),
and **that** the control device (8) is configured and organized to provide at least one repeat mode in which the damper device (1) can be controlled according to the route-related data (6) stored in the storage device (9).

2. The suspension system (100) according to claim 1 wherein at least one sensor (5) is provided which during operation captures route-related data (6) on the operational state (7) and on operator input and stores these in the storage device (9).

3. The suspension system (100) according to claim 1 or 2 wherein the control device (8) is configured and organized to store operator data (6, 60) as the data (6) in the storage device (9).

4. The suspension system (100) according to claim 1, 2 or 3 wherein the damper device (1) comprises at least two damper chambers (2, 3) coupled with one another and wherein in particular at least one sensor (5) is provided for capturing the movements of the damper piston (2, 3) relative to one another.

5. The suspension system (100) according to claim 1, 2, 3 or 4 wherein at least one sensor (5) is provided as a GPS sensor (18) for capturing position data (61) of the current position.

6. The suspension system (100) according to at least one of the preceding claims wherein in repeat mode by way of position data (6, 61) related control data can be determined from the storage device (9) and the damper device (1) can be controlled accordingly wherein changes to the settings are in particular possible in repeat mode.

7. The suspension system (100) according to at least one of the preceding claims wherein by way of position data (6, 61) and/or terrain data (6, 62) at least one damping characteristic of the damper device (1) can be set.

8. The suspension system (100) according to at least one of the preceding claims wherein an expert mode is provided.

9. The suspension system (100) according to at least one of the preceding claims wherein a suspension travel limit can be set.

10. The suspension system (100) according to at least one of the preceding claims wherein stored data (6) can be transmitted.

11. The suspension system (100) according to at least one of the preceding claims wherein at least two damper devices (1) are provided and can be operated coupled with one another.

12. The suspension system (100) according to at least one of the preceding claims wherein the damper device (1) comprises at least one controllable damping valve (4).

13. Method for controlling a suspension system for an at least partially muscle-powered two-wheeled vehicle having at least one controllable damper device (1) wherein a control device (8) and a storage device (9) and an operating device (13) for controlling the damper device (1) are provided, and wherein at least one damping characteristic of the damper device (1) can be influenced by a signal (50) of the control device (8), **characterized in**
**that** in at least one teaching mode the control device (8) stores route-related data (6) in the storage device (9) and that in at least one repeat mode the control device (8) controls the damper device (1) according to the route-related data (6) stored in the storage device (9).

14. The suspension system (100) according to at least one of the preceding claims wherein maintenance warnings are emitted based on the stored data (6).

## Revendications

1. Commande de châssis (100) pour une bicyclette actionnée au moins en partie par force musculaire, avec au moins un dispositif amortisseur (1) apte à être commandé, dans laquelle un dispositif de commande (8) et un dispositif de mémorisation (9) et un dispositif de manoeuvre (13) pour commander ledit dispositif amortisseur (1) sont prévus et dans laquelle au moins une propriété d'amortissement dudit dispositif amortisseur (1) peut être influencée par un signal (50) du dispositif de commande (8),
**caractérisée par le fait que** le dispositif de commande (8) est configuré et adapté pour fournir au moins un mode d'apprentissage dans lequel des données relatives au parcours (6) sont stockées dans le dispositif de mémorisation (9),
et que le dispositif de commande (8) est configuré et adapté pour fournir au moins un mode de répétition dans lequel le dispositif amortisseur (1) est commandable conformément aux données relatives au parcours (6) stockées dans le dispositif de mémorisation (9).

2. Commande de châssis (100) selon la revendication 1, dans laquelle au moins un capteur (5) est prévu qui, durant la marche, saisit des données relatives au parcours (6) sur l'état de fonctionnement (7) et sur des entrées de manoeuvre et met celles-ci dans le dispositif de mémorisation (9).

3. Commande de châssis (100) selon la revendication 1 ou 2, dans laquelle le dispositif de commande (8) est configuré et adapté pour stocker des données de manoeuvre (6, 60) en tant que données (6) dans le dispositif de mémorisation (9).

4. Commande de châssis (100) selon la revendication 1, 2 ou 3, dans laquelle le dispositif amortisseur (1) comprend au moins deux chambres d'amortisseur (2, 3) couplées entre elles et dans laquelle en particulier au moins un capteur (5) de détection du mouvement relatif du piston d'amortisseur (2, 3) l'un par rapport à l'autre est prévu.

5. Commande de châssis (100) selon la revendication 1, 2, 3 ou 4, dans laquelle au moins un capteur (5) est prévu en tant que capteur GPS (18) pour la détection de données de position (61) de la position instantanée.

6. Commande de châssis (100) selon l'une au moins des revendications précédentes, dans laquelle, dans le mode de répétition, des données de commande associées du dispositif de mémorisation (9) peuvent être déterminées à partir de données de position (6, 61) et le dispositif amortisseur (1) est commandable de manière correspondante, une modification des réglages étant possible en particulier dans le mode de répétition.

7. Commande de châssis (100) selon l'une au moins des revendications précédentes, dans laquelle au moins une propriété d'amortissement du dispositif amortisseur (1) est réglable à partir de données de position (6, 61) et/ou de données de terrain (6, 62).

8. Commande de châssis (100) selon l'une au moins des revendications précédentes, dans laquelle un mode d'expert est prévu.

9. Commande de châssis (100) selon l'une au moins des revendications précédentes, dans laquelle une limitation de course de ressort est réglable,

10. Commande de châssis (100) selon l'une au moins des revendications précédentes, dans laquelle des données stockées (6) peuvent être transmises.

11. Commande de châssis (100) selon l'une au moins des revendications précédentes, dans laquelle au moins deux dispositifs amortisseurs (1) sont prévus et peuvent être actionnés en étant couplés entre eux.

12. Commande de châssis (100) selon l'une au moins des revendications précédentes, dans laquelle le dispositif amortisseur (1) comprend au moins une soupape d'amortissement (4) apte à être commandée.

13. Procédé de commande d'un châssis pour une bicyclette actionnée au moins en partie par force musculaire, avec au moins un dispositif amortisseur (1) apte à être commandé, dans lequel un dispositif de commande (8) et un dispositif de mémorisation (9) et un dispositif de manoeuvre (13) pour commander ledit dispositif amortisseur (1) sont prévus et dans lequel au moins une propriété d'amortissement dudit dispositif amortisseur (1) peut être influencée par un signal (50) du dispositif de commande (8),
**caractérisé par le fait que**, dans au moins un mode d'apprentissage, le dispositif de commande (8) met des données relatives au parcours (6) dans le dispositif de mémorisation (9),
et que, dans au moins un mode de répétition, le dispositif de commande (8) commande le dispositif amortisseur (1) conformément aux données relatives au parcours (6) stockées dans le dispositif de mémorisation (9).

14. Commande de châssis (100) selon l'une au moins des revendications précédentes, dans laquelle des rappels d'entretien sont fournis à partir des données (6) stockées.
